# EUROPÄISCHE PATENTSCHRIFT

(11) **EP 0 730 800 B1**
(45) Veröffentlichungstag und Bekanntmachung des Hinweises auf die Patenterteilung: **12.07.2000**
(21) Anmeldenummer: 95901422.6
(22) Anmeldetag: 23.11.1994
(51) Int. Cl.: H04H 1/02

(54) **VERFAHREN UND SCHALTUNGSANORDNUNG ZUR VERTEILUNG VON SENDEPROGRAMMINFORMATIONEN, VORZUGSWEISE IN BREITBAND-FERNMELDEWÄHLNETZEN**
PROCESS AND CIRCUIT FOR DISTRIBUTING INFORMATION ON BROADCAST PROGRAMMES, PREFERABLY IN WIDEBAND AUTOMATIC TELECOMMUNICATIONS NETWORKS
PROCEDE ET CIRCUIT PERMETTANT DE DIFFUSER DES INFORMATIONS SUR DES PROGRAMMES EMIS, DE PREFERENCE SUR DES RESEAUX AUTOMATIQUES DE TELECOMMUNICATION A LARGE BANDE

(30) Priorität: 24.11.1993 DE 4340076
(43) Veröffentlichungstag der Anmeldung: 11.09.1996
(73) Patentinhaber: PEITZ GmbH, 80686 München (DE)
(72) Erfinder: PEITZ, Albert, D-80686 München (DE)
(74) Vertreter: Dosterschill, Peter, Dr.
(86) Internationale Anmeldenummer: EP9403879
(87) Internationale Veröffentlichungsnummer: WO9515040

(56) Entgegenhaltungen:
- EP-A- 0 094 794
- EP-A- 0 333 466
- GB-A- 2 167 629
- US-A- 4 302 771

## Beschreibung

Die Erfindung bezieht sich auf ein Verfahren und eine Schaltungsanordnung zur Verteilung von Sendeprogramminformationen, vorzugsweise in Breitband-Fernmeldewählnetzen.

Aus der DE-OS 40 08 790 ist bereits eine Schaltungsanordnung für Fernmeldewählnetze, vorzugsweise Fernsprechwählnetze bekannt, bei denen mobile Teilnehmer über Funkwege und stationäre Teilnehmer über Kabelwege Zugang zu den Netzdiensten haben. Die bekannte Schaltungsanordnung ermöglicht es, stationären und mobilen Teilnehmern jeweils eine einzige, teilnehmerindividuelle Kennung zuzuordnen, die der Teilnehmer netzweit und unabhängig davon verwendet, ob er eine Verbindung von einer stationären oder einer mobilen Teilnehmerendeinrichtung aufbaut. Die bekannte Schaltungsanordnung ermöglicht es auch, über die Kabelwege festgeschaltete Nachrichtenkanäle, z.B. Fernseh- und Rundfunkkanäle zu übertragen. Die bekannte Schaltungsanordnung ist allerdings primär für Dialogverbindungen zwischen einzelnen stationären und/oder mobilen Netzteilnehmern ausgelegt und sieht entsprechende Vermittlungseinrichtungen vor, während die Rundfunk- und Fernsehkanäle lediglich in jeweils eine Basisstation eingespeist werden, an die ein Übertragungskabel mit Teilnehmerendeinrichtungen angekoppelt ist.

Aus US-A-4 302 771 ist ein drahtgebundenes System zur Verteilung von Fernsehsignalen bekannt. Das System weist eine Zentralstation, eine Mehrzahl von Vermittlungsstellen und eine Mehrzahl von Teilnehmerendeinrichtungen auf. Derartige zentralstrukturierte Systemkonfigurationen sind auch aus der GB-A-2 167 629 bekannt.

Ziel der Erfindung ist es, ein Verfahren und eine Schaltungsanordnung zur Verteilung von Sendeprogramminformationen, beispielsweise Fernseh- und Rundfunkprogrammen, der eingangs genannten Art anzugeben, welche eine netzweite Verteilung der Sendeprogramminformationen bei einer vergleichsweise geringen vermittlungstechnischen Belastung der an der Verteilung beteiligten Einrichtungen ermöglichen.

Dieses Ziel wird mit den Merkmalen des Patentanspruchs 1 bzw. 6 erreicht.

Die Erfindung zeichnet sich durch eine Mehrzahl von Vorteilen aus.

Ein wesentlicher Vorteil der Erfindung besteht in der außerordentlich ergiebigen Nutzung der vorhandenen Übertragungskapazität des Netzes. Sendeprogramminformationen, wie beispielsweise Fernsehprogramminformationen, werden dann und nur dann übertragen, wenn mindestens eine erste Teilnehmerendeinrichtung diese Informationen anfordert. Fordert nun zunächst eine zweite Teilnehmerendeinrichtung und dann weitere Teilnehmerendeinrichtung dieselben Fernsehprogramminformationen an, so führt dies nicht zu einer nennenswerten Erhöhung der gebundenen Übertragungskapazität im Netz: Sind beispielsweise die erste und zweite Teilnehmerendeinrichtung an dasselbe (Breitband-)Kabel angekoppelt und entsprechend der im Rahmen der Erfindung vorgesehenen Vermittlungsstruktur vermittlungstechnisch zu einer Gruppe (Versorgungsbereich) derselben Vermittlungsstelle zusammengefaßt, so erhalten beide Teilnehmerendeinrichtungen dieselben Sendeprogramminformationen auf demselben Empfangskanal. Sind beispielsweise die erste und zweite Teilnehmerendeinrichtung nicht an dasselbe (Breitband-) Kabel angekoppelt, so erhalten beide Teilnehmerendeinrichtungen dieselben Sendeprogramminfomationen zwar auf zwei unterschiedlichen Empfangskanälen. Eine Fernmeldeverbindung zwischen der beiden Teilnehmerendeinrichtungen gemeinsam zugeordneten Vermittlungsstelle und der Sendeeinrichtung wird aber nur einmal hergestellt, so daß auch in diesem Fall eine vergleichsweise geringe Beanspruchung des Netzes erzielt wird.

Die Erfindung sieht also vor, daß Teilnehmer den Nutzungsgrad der Sendeeinrichtungen bestimmen. Dabei kann eine Vielzahl von Sendeeinrichtungen im Netz vorgesehen sein, wobei nur die von den Sendeeinrichtungen angebotenen und von Teilnehmerendeinrichtungen angeforderten Sendeprogramminformationen in das Netz eingespeist werden.

Mit diesem außerordentlichen Vorteil ist zugleich der weitere wesentliche Vorteil verbunden, daß zu einer netzweiten Verteilung von Sendeprogramminformationen nur eine vergleichsweise geringe Anzahl von Verteilverbindungen aufzubauen ist. Dies bedeutet gleichzeitig, daß die an der Herstellung der Verteilverbindungen beteiligten Steuerungen, insbesondere in den Vermittlungsstellen, in einem vergleichsweise nur geringen Maß belastet werden.

Das erfindungsgemäße Verfahren ermöglicht es auch, sowohl die Berechtigung der Teilnehmerendeinrichtungen zum Empfang von Sendeprogramminformationen und als auch die Berechtigtung der Sendeeinrichtungen zur Übermittlung der Sendeprogramminformationen von vorgebbaren Bedingungen wie Zeit, Netzbereich, finanzieller Status von Sendeprogrammanbietern und Teilnehmern abhängig zu machen. Weiterhin ermöglicht das erfindungsgemäße Verfahren, Übertragungskapazität für bestimmte Zwecke, z.B. Meldungen bei Notfallereignissen, bereitzuhalten.

Bei dem erfindungsgemäßen Verfahren bestimmen also primär die (Fernseh- und Rundfunk-)Teilnehmer den Nutzungsgrad und die Verbreitung eines Programmangebotes im Netz. Die Übernahme entstehender Kosten kann dabei beliebig zwischen Sendeprogrammanbietern und Teilnehmern verteilt werden. Zur Berechnung der von Sendeanbietern und/oder Teilnehmern zu zahlenden Gebühren werden von den Vermittlungsstellen des Netzes die Verteilung der Sendeprogramminformationen betreffende Daten teilnehmerendeinrichtungsindividuell und/oder sendeeinrichtungsindividuell und/oder auch hinsichtlich benutzter Netzteile individuell gebildet. Zu diesen Daten gehören beispielsweise Einschaltzeitpunkt and Einschaltdauer der Teilnehmerendeinrichtungen und der Sendeeinrichtungen, die Dauer und der Umfang von Netzbelegungen.

Für diese Aufgaben können gegebenenfalls vorhandene Einrichtungen für die Gebührenerfassung von Dialogverbindungen in den Vermittlungsstellen ergänzt werden. Ebenso können die Steuerprogramme der Vermittlungsstellen für diese Aufgaben erweitert werden.

Ein weiterer Vorteil der Erfindung besteht darin, daß von einem einzelnen Teilnehmerzugangspunkt (z.B. Anschluß einer Teilnehmerendeinrichtung an das zugehörige Breitbandkabel) praktisch beliebig viele Verbindungen gleichzeitig hergestellt werden können, weil an jedem Teilnehmerzugangspunkt alle Kommunikations-Kanäle/Kanalpaare zugänglich sind. Dies gestattet auf der einen Seite zwar die Möglichkeit des Anschlusses von Studio(Sende-)-Einrichtungen mit Konferenzeinrichtung, andererseits aber auch die Vervielfachung von Sendungen an jedem beliebigen Teilnehmerzugangspunkt und damit die Möglichkeit der Gebührenarbitrage. Erfindungsgemäß wird das dadurch verhindert, daß jedem Studio-Anschluß (Sendeeinrichtung) ein Kennzeichen zugeordnet ist, das von der gemeinsamen Steuerung der Vermittlungsstelle abgerufen werden kann und vor der Herstellung einer Verteil- oder Konferenz-Verbindung einer Berechtigungsprüfung unterzogen wird, wobei Verbindungen von und zu nichtberechtigten Teilnehmern unterbunden werden.

Die Erfindung ermöglicht nicht nur die Herstellung von Konferenzverbindungen, bei denen Empfangskanäle vielfach geschaltet werden, sondern auch die Herstellung sogenannter Partyline-Verbindungen, bei denen außer der Vielfachschaltung von Empfangskanälen eines Kanalpaares auch ein oder mehrere Sendekanäle für die Teilnehmerendeinrichtungen vielfachgeschaltet werden. Diese Vielfachschaltung kann durch eine zentrale Einrichtung? Teilnehmerendeinrichtung individuell aktiviert werden. Damit lassen sich Rundfunk- und Fernsehverbindungen mit Publikumsbeteiligung (Partyline-Verbindungen) schalten.

Die erfindungsgemäße Schaltungsanordnung ermöglicht es, das Fernmeldewählnetz für unterschiedliche Übertragungsstandards, wie PAL, SEKAM, D2-Mac, aber auch für unterschiedliche Teleservices und Endgeräte, wie z.B. das Telefon, durch entsprechende Ausgestaltung der Einrichtungen BSK an den Schnittstellen zwischen Teilnehmerendeinrichtungen und Vermittlungsstellen bzw. an den Schnittstellen zwischen Sendeeinrichtungen und Vermittlungsstellen auszugestalten. Wenn, wie dies in vielen Ländern der Fall ist, unterschiedliche Dienste wie z.B. Fernsehen, Rundfunk, Telefon aus administrativen Gründen in getrennten Netzen bereitgestellt werden, können im Rahmen der Erfindung getrennte Netze zusammengeführt werden. Hierzu wird jedem Netz und jeder Teilnehmerkategorie ein Service-Kennzeichen zugeordnet, mit dem jede Verbundung hinsichtlich Verbindungsart (z.B. Verteilverbindung, Dialogverbindung), Übertragungsstandards und der Netzzugehörigkeit getrennt behandelt werden kann.

Das Fernmeldewählnetz läßt sich sowohl für Verteilverbindungen (einschließlich Konferenzverbindungen und Partyline-Verbindungen) als auch für Dialogverbindungen, und zwar auch simultan, also nebeneinander, insbesondere durch eine entsprechende Ausgestaltung der vermittlungstechnischen Steuerprogramme der an den Verbindungen beteiligten Einrichtungen, verwenden.

Im Rahmen der Erfindung kann als Übertragungsmedium zwischen den Vermittlungsstellen und den Teilnehmerendeinrichtungen, aber auch zwischen Vermittlungsstellen anstelle eines Kabels, insbesondere eines Breitbandkabels, wie z.B. eines Glasfaserkabels oder zusätzlich zu dem Kabel auch über Satelliten-Verbindungen oder über terrestrische Funkverbindungen geschaltete Ton-/Bild-Kanalpaare verwendet werden. Die Durchführung des erfindungsgemäßen Verfahrens ist damit nicht an ein bestimmtes Übertragungsmedium gebunden.

Weitere Vorteile der Erfindung sind in den Unteransprüchen gekennzeichnet und ergeben sich auch aus der nachfolgenden Beschreibung der Erfindung anhand der Figuren.

Es zeigt:
- Fig. 1: die Grundstruktur eines Fernmeldewählnetzes für die Herstellung von Verteilverbindungen gemäß der Erfindung;
- Fig. 2: Einrichtungen des Fernmeldewählnetzes nach Fig. 1 in Blockschaltbilddarsteilung;
- Fig. 3: das Blockschaltbild einer Vermittlungsstelle zur Durchführung des erfindungsgemäßen Verfahrens;
- Fig. 4: das Blockschaltbild einer Teilnehmerendeinrichtung zur Durchführung des erfindungsgemäßen Verfahrens;
- Fig. 5: das Blockschaltbild einer Sendeeinrichtung zur Durchführung des erfindungsgemäßen Verfahrens;
- Fig. 6: das Fernmeldewählnetz nach Fig. 1 in schematischer Darstellung einer ersten Ausführungsform des erfindungsgemäßen Verfahrens;
- Fig. 7: das Fernmeldewählnetz nach Fig. 1 in schematischer Darstellung einer zweiten Ausführungsform des erfindungsgemäßen Verfahrens;
- Fig. 8: das Fernmeldewählnetz nach Fig. 1 in schematischer Darstellung einer dritten Ausführungsform des erfindungsgemäßen Verfahrens.

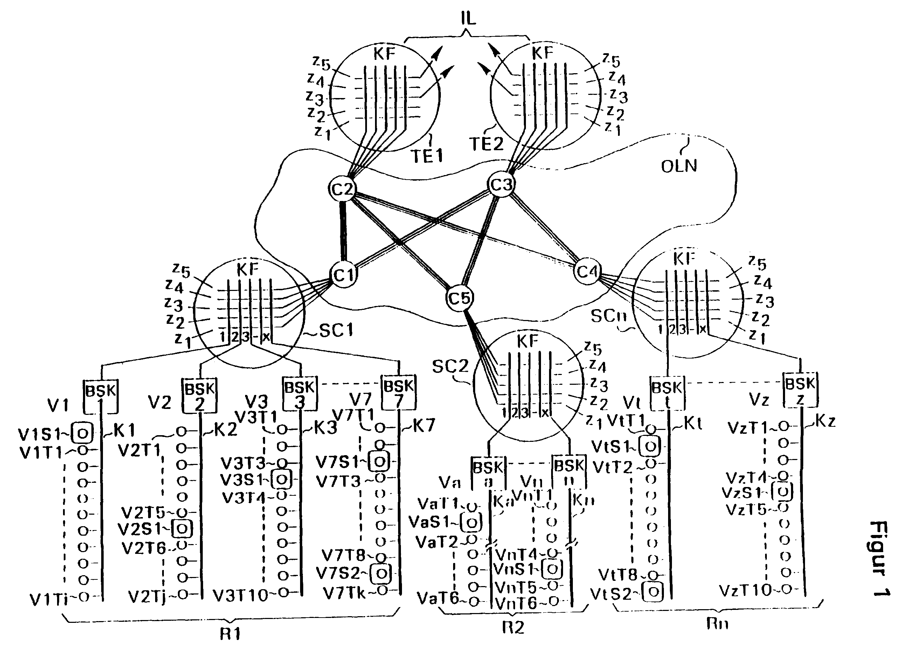

In Fig. 1 ist ein Beispiel eines Fernmeldewählnetzes dargestellt, in dem das Verfahren gemäß der Erfindung durchgeführt werden kann. Das dargestellte Fernmeldewählnetz besteht aus (Teilnehmerzugangs-)Vermittlungsstellen SC1, SC2, ..., SCn, mit jeweils einem Koppelfeld KF und Transitvermittlungsstellen TE1, TE2, die die Teilnehmerzugangsvermittlungsstellen miteinander verbinden.

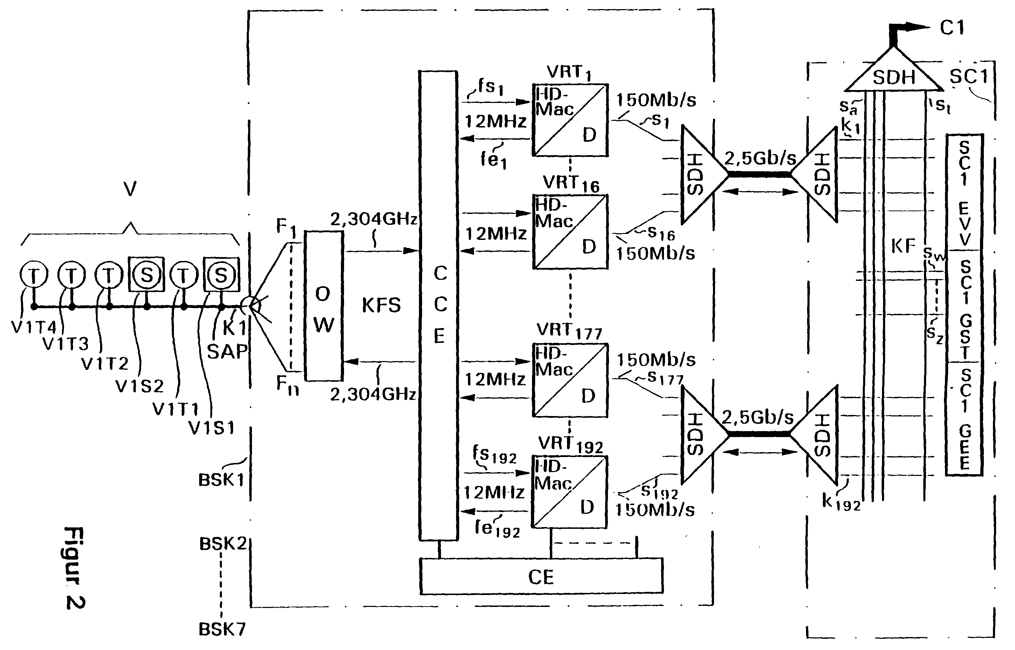

Ein Territorium beispielsweise eines Landes in in mehrere Regionen R1, R2-Rn aufgeteilt. Jede Region R1, R2-Rn weist eine Vermittlungsstelle SC1, SC2-SCn auf. Jede Region besteht aus mindestens einem Versorgungsbereich V (Gruppe), in dem eine Gruppe von Teilnehmerendeinrichtungen VT bedient wird. Jeder Versorgungsbereich V weist in dem dargestellten Beispiel genau ein (Breitband-)Kabel K auf, an dessen Schnittstelle zu der regionindividuellen Schnittstelle eine Einrichtung BSK angeordnet ist, deren Funktion weiter unten anhand von Fig. 2 beschrieben wird und an das die Teilnehmerendeinrichtungen VT, z.B. Fernsehgeräte oder Rundfunkgeräte, und/oder Studio- bzw. Sendeeinrichtungen VS angekoppelt sind.

In dem in Fig. 1 dargestellten Beispiel besteht folgende Aufteilung von Regionen R, Vermittlungsstellen SC, Einrichtungen BSK, Gruppen V, Kabeln K, Teilnehmerendeinrichtungen VT und Sendeeinrichtungen VS:

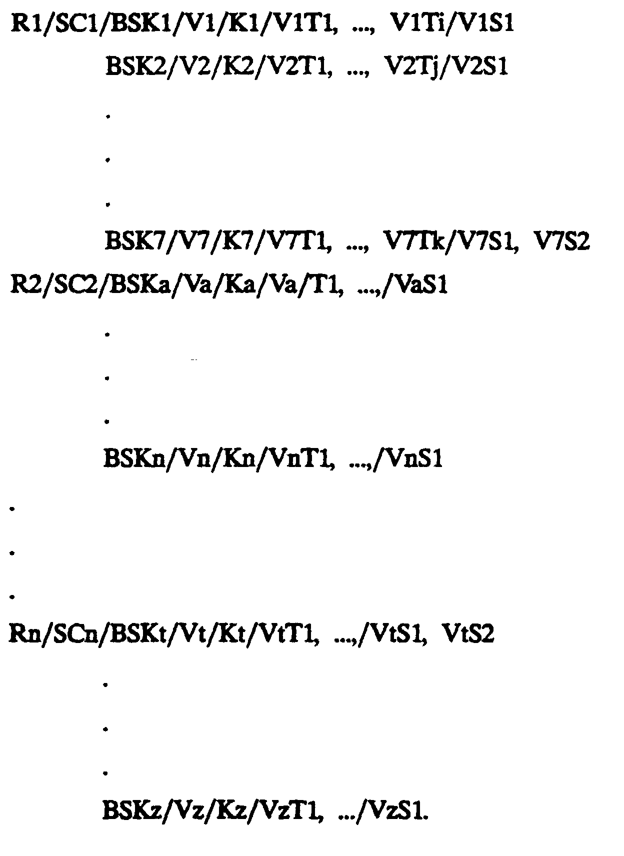

Die Verknüpfung der (Teilnehmerzugangs-)Vermittlungsstellen SC1, SC2-SCn erfolgt über eine Transitvermittlungsstelle TE1 oder TE2; vorzugsweise weist das Fernmeldewählnetz aus Gründen der Sicherheit mehrere, mindestens jedoch zwei Transit- oder Tandemvermittlungsstellen auf. Ein Glasfaser-Overlay-Netz OLN höchster (Übertragungskapazität ist zwischen die (Teilnehmerzugangs-)Vermittlungsstellen und die Transit- bzw. Tandemvermittlungsstellen geschaltet. Das Netz OLN weist "Cross Connect Multiplexer" C1 bis C5 mit sehr hoher Bitrate auf, zwischen denen einzelne, redundante Übertragungsstrecken angeordnet sind. Leitungen IL, die zu netzexternen Sende- und/oder Empfangseinrichtungen (z.B. Teilnehmerendeinrichtungen) führen, sind an die Tandem-Vermittlungsstellen TE1, TE2 ankoppelbar und ermöglichen kommende und gehende netzexterne (internationale) Verbindungen.

Bei dieser Architektur des Netzes dienen die Tandem-Vermittlungsstellen TE1, TE2 also ausschließlich der Herstellung netzexterner (internationaler) und überregionaler Verkehrsbeziehungen, während der lokale Verkehr innerhalb einer Gruppe (Versorgungsbereich) V und der regionale Verkehr zwischen unterschiedlichen Gruppen als Internverkehr innerhalb der jeweiligen Teilnehmerzugangsvermittlungsstellen SC1, SC2-SCn abgewickelt werden kann. Die in Fig. 1 dargestellte Netzarchitektur ist lediglich ein Beispiel für eine Netzarchitektur, die für die Durchführung des erfindungsgemäßen Verfahrens geeignet ist. Andere Netzarchitekturen wie z.B. eine mehrstufige Anordnung mit einer Knoten-, Haupt- und Zentralvermittlungsebene ist ebenso für die Durchführung des erfindungsgemäßen Verfahrens geeignet.

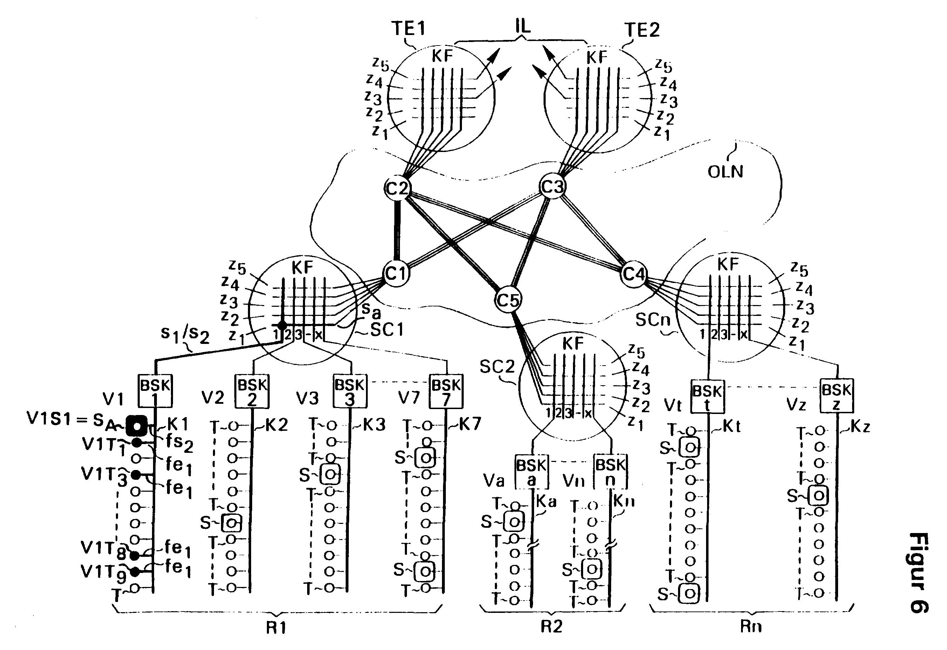

Bei der in Fig. 1 dargestellten Netzarchitektur ergeben sich für die Herstellung erfindungsgemäßer Verteilverbindungen drei Kategorien, die unten anhand der Fig. 6, 7 und 8 am Beispiel einer Fernsehprogramm-Verteilung näher erläutert werden.

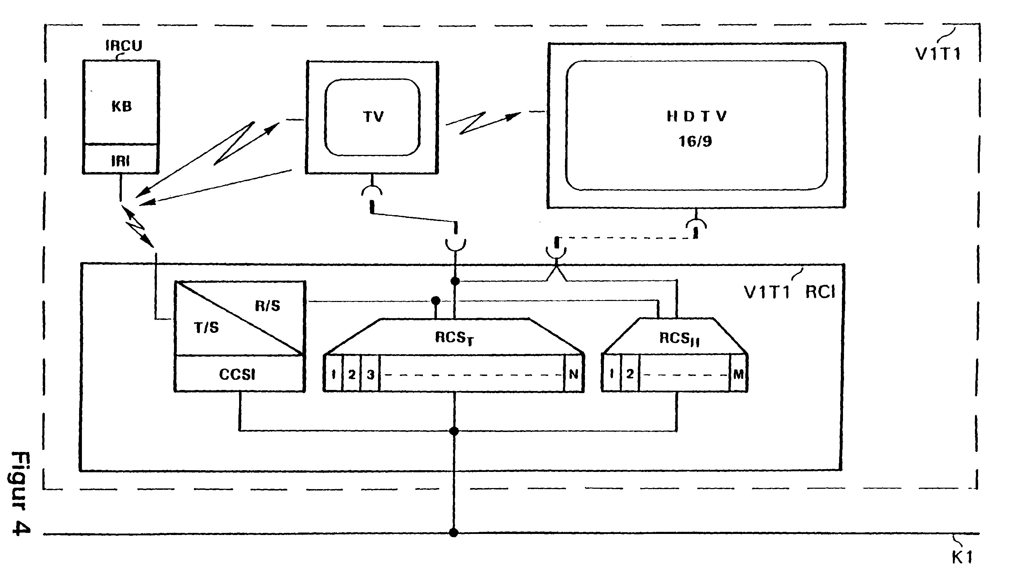

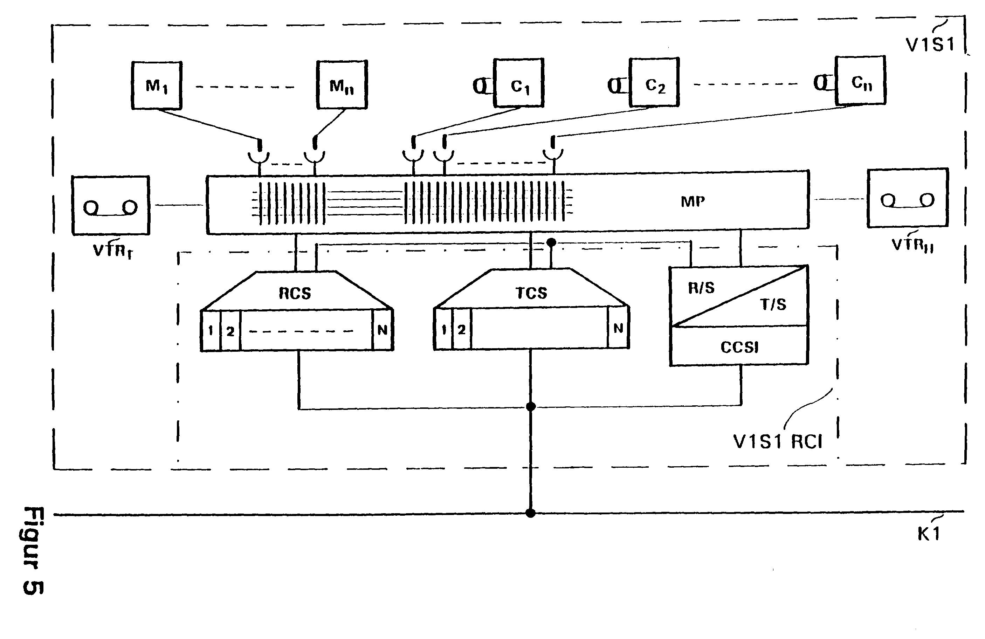

Fig. 2 zeigt den Aufbau einer Vermittlungsstelle SC1 und einer Einrichtung BSK1, an die ein Breitbandkabel K1 mit Teilnehmerendeinrichtungen V1T1, ..., V1T4 und Sendeeinrichtungen (Studio-Einrichtungen) V1S1 und V1S2 angeschlossen sind. Die gemeinsam am Kabel K1 angeschlossenen Teilnehmerendeinrichtungen und Sendeeinrichtungen bilden eine Gruppe oder einen Versorgungsbereich V; sie können über Kanalfilter, die unten anhand der Fig. 4 bzw. 5 beschrieben werden, auf das gesamte Kabelfrequenzspektrum KFS von z.B. 2x2,304 GHz zugreifen, das in 192 Sendekanäle fs1-fs192 von je 12 MHz und in 192 Empfangskanäle fe1-fe192 von je 12 MHz aufgeteilt ist.

Das Breitbandkabel K1 kann aus mehreren Fasern F1-Fn bestehen, um eine günstige Erschließung den in einer Fläche des Versorgungsbereichs V verteilten Teilnehmerendeinrichtungen und Sendeeinnichtungen zu ermöglichen.

Die Einrichtung BSK wandelt in dem vorliegenden Beispiel 192 digitale Bildkanalpaare s1-s192 mit z.B. je 150 Mb/s, so wie sie in einem modernnen digitalen Breitband-Fermeldewählnetz im asynchronen Transfer-Modus (ATM) vermittelt und übertragen werden, in 192 frequenzmodulierte Fernsehbild-Kanäle/Kanalpaare fe1/fs1-fe192/fs192 um und fügt sie in das Kabelfrequenzspektrum KFS eines Breitbandkabels K ein. In digitalen Bildkanalpaaren s1-s192 werden Sendeprogramminformationen zwischen Einrichtungen BSK und Vermittlungsstellen SC, TE übertragen. In den Empfangskanälen fc1-fe192 werden die Sendeprogramminformationen zwischen den Einrichtungen BSK und den Teilnehmerendeinrichtungen übertragen; in den Sendekanälen fs1-fs192 werden die Sendeprogramminformationen zwischen den Sendeeinrichtungen und den Einrichtungen BSK übertragen.

Die Umwandlung erfolgt z.B. in den HD-Mac-Standard für den Empfang des hochauflösenden HDTV. Das Prinzip ist hierbei mit dem in Funkbasisstationen der Mobilkommunikation vergleichbar. Die Umwandlung erfolgt z.B. durch Einrichtungen VRT1-VRT192 (Video Radio Terminator), an deren Ansgang die Bild-Kanäle (Kanalpaare fe1/fs1-fe192/fs192 als Frequenzbereich von je 2x12 MHz einer Kabel-Koppel-Einrichtung CCE angeboten werden. Die Einrichtung CCE fügt die Bild-Kanäle/Kanalpaare fe1/fs1 - fe192f/s192 in das Kabelfrequenzspektrum KFS von 2x2,304 GHz ein und speist sie über einen opto-elektronischen Wandler OW in das Breitbandkabel K1 ein.

Eine Steuereinrichtung CE in der Einrichtung BSK stellt die für die Digital/HD-Mac-Umwandlung HD-Mac/D und die Generierung des Kabelfrequenzspektrums KFS notwendigen Zeittakte zur Verfügung.

Die Einrichtungen BSK werden, wenn sie räumlich getrennt von der ihr zugeordneten Vermittlungsstelle SC aufgebaut sind, über sogenannte "Synchronous Digital Hierarchy" (SDH)-Multiplexer hoher Bitrate (2,5 Gb/s) mit dieser Vermittlungsstelle SC verbunden, wobei jede Multiplexstrecke 16 Bildkanalpaare s1 - s16 mit einer Bitrate von 150 Mb/s und eine geringe Anzahl von gemeinsamen Signalisierungskanälen mit z.B. 16 kb/s übertragen kann.

Mindestens eine Einrichtung BSK, in der Regel jedoch mehrere Einrichtungen BSK, z. BSK1, ... BSSK7 (Fig. 1) sind mit einer Vermittlungsstelle SC1 verbunden.

Die Vermittlungsstelle SC1 verfügt über ein Koppelfeld KF, an dem jedes digitale Bild-Kanalpaar s1 - s192 am Eingang einen Koppelfeldpunkt k1 - k192 belegt, während ausgangsseitig Digital-Bildkanalpaare sast über den Multiplexer C1 zu den Transit- bzw. Tandem-Vermittlungsstellen führen. Gemeinsame Signalisierungskanäle sw-sz mit z.B. 16 kb/s führen zu einer gemeinsamen Steuerung SC1GST der Vermittlungsstelle SC1 und zu einer Einrichtung für Verteil-Verbindungen SC1EVV. Diese Einrichtung SC1EVV kann insbesondere durch ein Softwaremodul gebildet werden, das in das vermittlungstechnische Steuerungsprogramm (SC1GST) integriert ist.

Die Einrichtung für Verteil-Verbundungen SC1EVV bzw. das entsprechende Softwaremodul in der Steuerung SC1GST registriert teilnehmerindividuell, sendeeinrichtungsindividuell und/oder netzteilindividuell Verbindungsdaten für statistische Zwecke und für die Bildung von Gebührendaten: Gebührendaten können von einer separaten, an sich bekannten Gebührendaten-Erfassungs-Einrichtung SC1GEE gebildet werden.

In zukünftigen Vermittlungssystemen, die Koppelfelder mit optischen Koppelelementen aufweisen, wird eine breitbandige transparente Durchschaltung erfolgen, so daß dann die Digital/HD-Mac-Umwandlung und die hierfür notwendigen Einrichtungen (VTR1-VTR192) entfallen können.

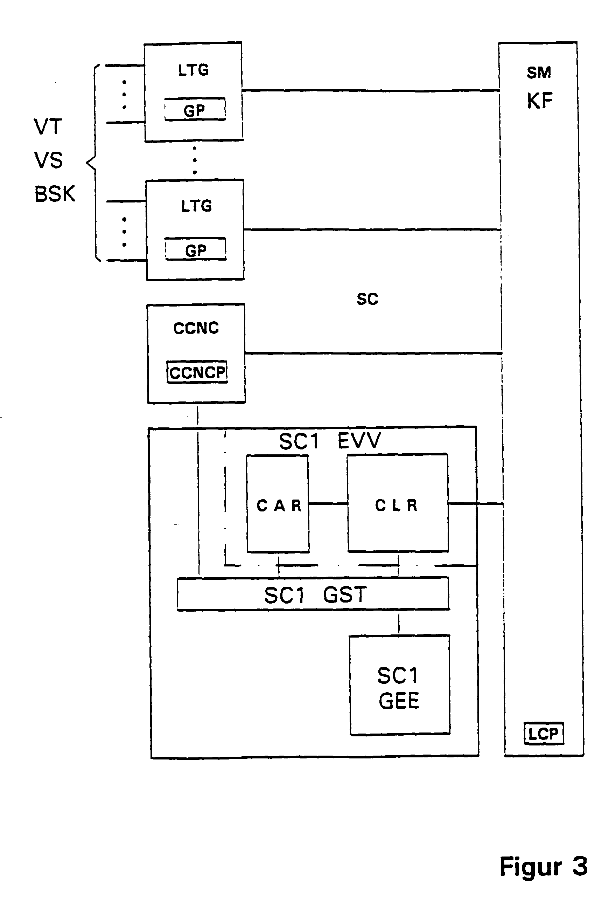

Weitere Einzelheiten zur Struktur der Vermittlungsstelle SC1 werden nun an Hand Figur 3 erläutert.

Die Vermittlungsstelle SC1, die eine identische Struktur wie die übrigen Vermittlungsstellen des Fernmeldewählnetzes aufweisen kann, besteht aus den Komponenten Koppelfeld KF (Switching Matrix SM), der Einrichtung CCNC (Common Channel Signalling Network Control), Gemeinsame Steuerung SC1GST und Leitungsbaugruppen LTG (Line Trunk Groups).

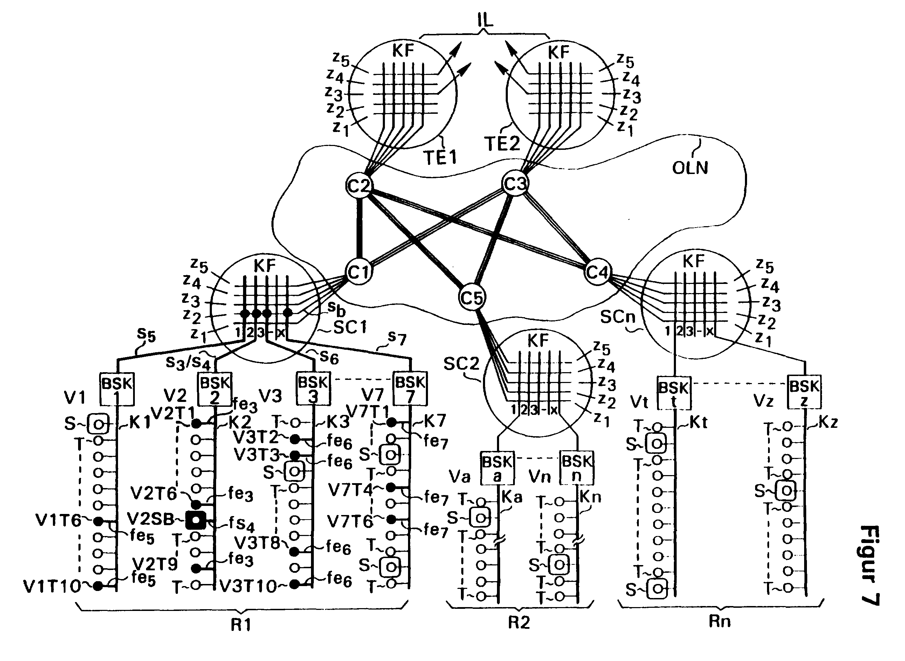

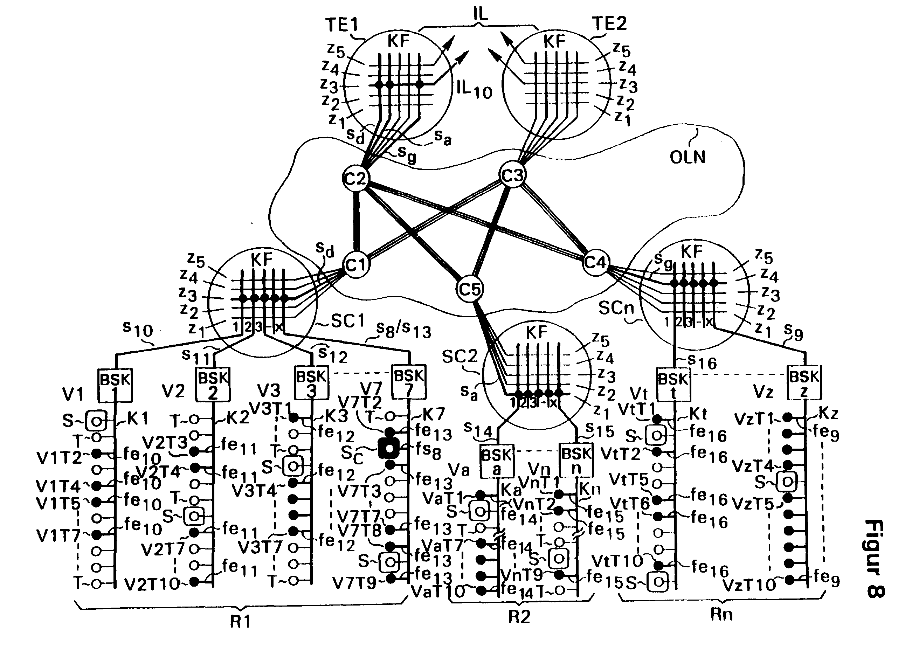

Über das Koppelfeld KF werden Verbindungen sowohl zwischen unterschiedlichen Vermittlungsstellen geschaltet (Figur 8) als auch Verbindungen zwischen Einrichtungen BSK (Figur 2) derselben Vermittlungsstelle (Figuren 6 und 7). Die Verbindungen haben eine Übertragungsrate bis zu 150 Mb/s.

Die Einrichtung CCNC steuert und überwacht Signalisierungen auf 16/64 kb/s-Kanälen von und zu den Teilnehmerendeinrichtungen VT und den Sendeeinrichtungen VS sowie von und zu den Einrichtungen BSK (Figur 2). Hierzu ist der Einrichtung CCNC ein eigener Prozessor CCNCP zugeordnet. In einem Common Location Register CLR sind für diese Steuerung und Überwachung alle notwendigen Teilnehmerdaten wie z.B. Diensteberechtigungen, "Closed user groups" und sonstige Daten für die Verbindungs- und Verkehrsabwicklung teilnehmerindividuell gespeichert und zugänglich.

Die gemeinsame Steuerung SC1GST führt mittels des ihr zugeordneten vermittlungstechnischen Programms folgende Aufgaben durch:
- Steuerung der gemeinsamen Programmabläufe und Speicherung der zugehörigen Programme und Daten
- Informationsverarbeitung für die Auswahl freier Sende-/Empfangs-Kanäle zur Herstellung von Verteilverbindungen im Koppelfeld (SM)
- Informationsverarbeitung für die Verzonung, Gebührendatenerfassung, Gebührenverrechnung und Verkehrsstatistiken
- Informationsaustausch zwischen den zentralen Einrichtungen EVV, GEE und CLR
- Fehlerüberwachung und Fehlerbehandlung
- Konfigurationskontrolle.

Figur 4 zeigt das Blockschaltbild einer beliebigen Teilnehmerendeinrichtung V1T1. Sie ist an das Breitbandkabel K1 angeschlossen. Die Teilnehmerendeinrichtung besteht aus einer Steuerungsschaltung V1T1RCI, die die weiteren Komponenten der Teilnehmerendeinrichtung steuert und die Schnittstelle zum Breitband-Kabel K1 realisiert, dem eigentlichen Endgerät, z.B. einem Fernsehgerät TV und/oder einem hochauflösenden (High Definition)-Fernsehgerät HDTV und einer Bedieneinrichtung, insbesondere einer Fernbedieneinrichtung IRCU.

Die Schaltung V1T1RCI kann als eine separate Einrichtung ausgeführt sein oder in das jeweilige Endgerät integriert sein. Sie umfaßt eine Sendesignalumwandlungseinrichtung T/S, eine Empfangssignalumwandlungseinrichtung R/S sowie eine sogenannte Common Channel Signalling-Schnittstelle CCSI. Weiterhin ist in der Schaltung V1T1RCI eine Kanalauswahlschaltung (Kanalfilter) RCST für den Empfang herkömmlicher Fernsehprogramminformationen und/oder eine Kanalauswahlschaltung (Kanalfilter) RSCH für den Empfang von HDTV-Fernsehprogramminformationen angeordnet.

Die Schaltung V1T1RCI dient der Anpassung herkömmlicher Fernsehgeräte TV,HDTV an das Breitbandkabel K1 für die Kanalauswahl im Rahmen der Erfindung.

Auf dem Breitbandkabel K1 sind außer den frei wählbaren Empfangskanälen fe1-fe192 und den Sendekanälen fs1-fs192 gemeinsame Signalisierungskanäle s1-su zugänglich, wobei die Funktion der Signalisierungskanäle mit denen in einem Mobilfunknetz, wie in dem deutschen Patent DE 40 08 790 beschrieben, übereinstimmen. Im wesentlichen Unterschied zu der heutigen Programmauswahl ist erfindungsgemäß vorgesehen, daß die Kanalfilter der Teihnehmerendeinrichtungen nicht direkt durch die Bedieneinrichtung IRCU auf fest zugeteilte Programme geschaltet werden, sondern indirekt durch die Vermittlungsstellen SC. Zu diesem Zweck verfügt die Schaltung V1T1RCI über die Sendesignalumwandlungseinrichtung T/S und die Empfangssignalumwandlungseinrichtung R/S sowie über die Schnittstellenschaltung CCSI zu den genannten Signalisierungskanälen s1-su (Figur 2). Auf diese Weise kann der Teilnehmer die Tastatur seiner Bedieneinrichtung als Wahltastatur wie bei einem Telefon benutzen. Infrarot-Fernbedienungssignale werden in der Sendesignalumwandlungseinrichtung T/S umgewandelt und über die Schnittstellenschaltung CCSI und die gemeinsamen Signalisierungskanäle an die Vermittlungsstelle SC übertragen. Die Vermittlungsstelle SC führt die Programmauswahl in der beschriebenen Weise durch, belegt gegebenenfalls einen der Empfangskanäle fe1-fe192 und überträgt wiederum wie im Mobilfunknetz ein Kanalschaltkommando über das Signalisierungsnetz zu der Schaltung V1T1RCI, weiches dort durch die Empfangssignalumwandlungseinrichtung R/S umgewandelt und zur Einstellung des Kanalfilterss 1-N in der Empfangskanalauswahlschaltung RCST, RCSH verwendet wird.

Die Schaltung V1T1TCI ist für den Einsatz mit herkömmlichen Fernsehgeräten als eine Zusatzeinrichtung implementiert, während sie in neuen Geräten die heutigen Kanalauswahlschaltungen ersetzt und damit integraler Bestandteil der jeweiligen Teilnehmerendeinrichtung ist.

Die in Figur 4 dargestellte Fernbedienungseinrichtung IRCU kann in ihrem schaltungstechnischen Aufbau bekannten Fernbedienungsgebern entsprechen. Eine solche Fernbedienungseinrichtung besteht aus einer Tastatur KB und einer Sendeeinrichtung IRI. Der Fernbedienungsgeber IRCU, der im Rahmen der Erfindung verwendet wird, sendet Infrarotsignale aus, die von der Sendesignalumwandlungseinrichtung T/S empfangen werden. Diese wandelt die empfangenen Signale in Signalisierungsinformationen bzw. Sendeprogrammanforderungsinformationen um und gibt sie über das gemeinsame Signalisierungsnetz wie beschrieben an die Vermittlungsstelle SC weiter.

Figur 5 zeigt das Blockschaltbild einer beliebigen Sendeeinrichtung V1S1. Diese in an das Breitbandkabel K1 angeschlossen. Die in Figur 5 dargestellte Sendeeinrichtung besteht aus einer Steuerungsschaltung V1S1CRI, die die weiteren Komponenten der Sendeeinrichtung steuert und die Schnittstelle zum Breitband-Kabel 1 realisiert, z.B. aus Kameras C1, ..., Cn, Videorekorder VTRT, VRH, Monitoren M1, ..., Mn und einer Videomischeinrichtung MP. Die Schaltung V1S1RCI umfaßt eine Sendesignalumwandlungseinrichtung T/S, eine Empfangssignalumwandlungseinrichtung R/S sowie eine sogenannte Common Channel Signalling-Schnittstelle CCSI, die in ihrem schaltungstechnischen Aufbau der an Hand von Figur 4 beschriebenen Schnittstellen CCS1 entspricht. Weiterhin ist in der Schaltung V1S1RCI eine Kanalauswahlschaltung RCS für den Empfang von Sendeprogramminformationen anderer Sendeeinrichtungen und eine Kanalauswahlschaltung TSC für das Senden der von der Sendeeinrichtung V1S1 gebildeten Sendeprogramminformationen angeordnet. Die Schaltung V1S1RCI realisiert in analoger Weise wie die Schaltung V1T1CRI eine Kanalzuteilung, d.h. die Anschaltung auf einen freien Sendekanal fs1-fs192 wie in der Mobiltechnik üblich über das gemeinsame Signalisierungsnetz, wobei, wie an Hand der Figur 4 beschrieben, die Schaltung R/S das von der Vermittlungsstelle für C ausgesendete Schaltkommando zur Einstellung des Kanalfilters 1-N der Kanalauswahlschaltung TSC umwandelt und an die Schaltung TCS weiterleitet. Die in Figur 5 dargestellte Schaltung V1S1RCI ermöglicht einen Duplexbetrieb und die Belegung mehrerer Sende- und Empfangskanäle. Sie läßt sich in vereinfachter Form für normale Teilnehmeranschlüsse verwenden, z.B. wenn ein Fernsehgerät mit Videokamera für Dialogverbindungen verwendet werden soll.

Figur 6 zeigt das Beispiel einer lokalen Verteil-Verbindung für den Versorgungsbereich VI.

Es sei angenommen, daß die Sendeeinrichtung (Studio) SA (V1S1) ein Ereignis von ausschließlich lokalem Interesse überträgt. Das Studio V1S1 bietet seine Sendung zunächst zwar an seinem Teilnehmerzugangspunkt (SAP) (Figur 2) dem Breitbandkabel K1 an, solange jedoch das schaltbare Kanalfilter V1S1RCI (Figur 5) der Sendeeinrichtung von der Vermittlungsstelle SC1 nicht auf einen freien Fernsehbild-Empfangskanal fe eingestellt wird, ist diese Sendung nicht zugänglich. Erst wenn ein erster Teilnehmer, z.B. V1T1 , durch Wahl der Studio-Rufnummer (Sendeprogrammanforderungsinformation JV1S1) diese Sendung anfordert, belegt die Vermittlungsstelle SC1 einen freien Empfangskanal, z.B. fe1 und verknüpft im Koppelfeld KF, z.B. über die Koppelfeldzeile z1 einen freien Sendekanal, z.B. fs2 mit dem freien Empfangskanal fe1.

Diese Zuordnung wird in der Einrichtung für Verteil-Verbindungen SC1EVV (Fig. 2) gespeichert und über die Signalisierungskanäle werden die Kanalfilter in der Teilnehmerendeinrichtung V1T1 auf den Empfangskanal fe1 und die Kanalfilter in der Studio-Einrichtung SA (V1S1) auf den Sendekanal fs2 geschaltet.

Bei diesem Verfahren schaltet also der erste Teilnehmer V1T1 die Sendeeinrichtung SA an das Netz und belegt dabei einen einzigen, der z.B. 192 Fernsehbild-Kanäle, nämlich fe1 und des ausschließlich im Versorgungsbereich V1.

Es sei ferner angenommen, daß nach und nach die Teilnehmerendgeräte V1T3, V1T8 und V1T9, die alle an dasselbe Kabel K1 angeschlossen sind, die gleiche Sendeeinrichtung V1S1 auswählen. Die Vermittlungsstelle SC1 schaltet über einen der gemeinsamen Signalisierungskanäle die Kanalfilter (Figur 4) der Teilnehmer V1T3, V1T8, V1T9 auf denselben Empfangskanal fe1, und macht damit die Sendung des Studios SA diesen Teilnehmerendgeräten des Versorgungsbereiches V1 zugänglich.

Im dargestellten Beispiel wird dabei zwischen der Einrichtung BSK1 und der Vermittlungsstelle SC1 für die Sendeeinrichtung V1S1 das Kanalpaar s2 (Fig. 2) und für die Teilnehmerendeinrichtungen das Kanalpaar s1 (Fig. 2) belegt.

Die in der Vermittlungsstelle SC1 vorhandene Gebührendaten-Erfassungseinrichtung SC1GEE (Figuren 2, 3) registriert den Einschaltzeitpunkt, die Einschaltdauer und die Adresse der Sendeeinrichtung SA (V1S1) teilnehmerindividuell und ermittelt auch die Einschaltquote exakt, was eine korrekte Verteilung der Gebühren auf die einzelnen Teilnehmer und eine Aufteilung der Einnahmen auf den Programmanbieter und den Netzbetreiber ermöglicht.

Die Auflösung des Verteilerkreises geschieht entweder, indem sich einzelne Teilnehmerendeinrichtungen V1T1, V1T3, V1T8, V1T9 durch ein Ausschaltekriterium von der Sendung abschalten, was von der Vermittlungsstelle SC1 teilnehmerindividuell registriert und veranlaßt wird und/oder indem das Studio SA durch Aussenden eines Ende-Kriteriums über einen der gemeinsamen Signalisierungskanäle s die Sendung beendet und damit die Freischaltung des Sendekanals fs2 und des Empfangskanals fe1 bei der Vermittlungsstelle SC1 veranlaßt.

Wie das beschriebene Beispiel zeigt, erfolgt bei dem erfindungsgemäßen Verfahren eine Fernsehverteil-Verbindung nicht wie im Stand der Technik durch eine feste Frequenzzuteilung für eine Sendeeinrichtung (Programmanbieter) und die automatische Verbreitung der Sendeprogramme über Sendeanlagen oder eine feste Kanalbelegung in einem Breitbandkabel und die Aufschaltung der Teilnehmer durch eine direkte Einstellung der Kanalfilter in den Teilnehmerendgeräten (Fernseher), sondern durch eine flexible, frei wählbare Frequeuzzuteilung und die teilnehmerbedarfsweise Verbreitung der Sendeprogramme. Dabei lassen sich in einem modernen Fernmeldewählnetz für die Abwicklung des Dialogverkehrs ohnehin vorhandene Schalt- und Übertragungsmittel mitverwenden. Darüber hinaus wird der Fernsehteilnehmer aktiver Partner im Angebot der Medienindustrie, weil nun die Verbreitung von Programmen im Netz von den Fernsehteilnehmern und nicht von den Fernsehanstalten bestimmt wird.

Eine regionale Verteil-Verbindung wird nun an Hand von Figur 7 beschrieben. Es sei angenommen, daß ein Ereignis von regionalem Interesse, z.B. ein Fußballspiel, von der Studio-Einrichtung (V2S1) SB im Versorgungsbereich V2 übertragen wird. Auch hier schaltet ein erstes Teilnehmerendgerät z.B. V2T1 des Versorgungsbereiches V2, wie für eine lokale Verteil-Verbindung an Hand von Figur 6 beschrieben, die Sendung ans Netz bzw. im Versorgungsbereich V2 verfügbar, indem dieses Teilnehmerendgerät V2T1 der Vermittlungsstelle SC1 eine Sendeprogrammanforderungsinformation IV2S1 übermittelt. Die Vermittlungsstelle SC1 verknüpft im Koppelfeld KF in Zeile z2 und Spalte 2 einen freien Empfangskanal fe3 mit einem freien Sendekanal fs4.

Die Vermittlungsstelle CS1 kann in der Koppelfeldzeile z2 eine sogenannte Multipunkt-Verbindung herstellen: wenn von Teilnehmerendgeräten aus weiteren Versorgungsbereichen V1, V3-V7 Sendeprogrammanforderungsinformation IV2S1 eingehen, die die gewünschte Übertragung derselben Sendeprogramminformationen von derselben Sendeeinrichtung V2S2=SB zu den unterschiedlichen Teilnehmerendgeräten bezeichnen, schaltet die Vermittlungsstelle SC1 den Sendekanal fs4, der ursprünglich ausgelöst durch die Sendeprogrammanforderungsinformation IV2S1 des Teilnehmerendgeräts V2T1 belegt und geschaltet wurde, bei der zeitlich ersten Anforderung aus einem anderen Versorgungsbereich V1, V3-V7 nacheinander auf einen versorgungsbereichsindividuellen (V2) freien Empfangskanal z.B. fe5, fe6, fe7 in den Koppelfeld-Spalten 1,3-x.

Die Übertragung der Sendeprogramminformationen des Studios SB ist also nach und nach auf jeweils einem der z.B. 192 Fernsehbild-Kanäle in jedem Versorgungsbereich V1, V2, V3-V7 zugänglich, nachdem jeweils ein zeitlich erster Teilnehmer in einem Versorgungsbereich das Studio SB angewählt hat. Die Zuschaltung der Teilnehmer in den einzelnen Versorgungsbereichen geschieht auf die gleiche, bereits beschriebene Weise, indem die Vermittlungsstelle SC1 die Kanalfilter, z.B. der Teilnehmerendeinrichtungen V1T6, V1T10 des Versorgungsbereiches V1 auf den Empfangskanal fe5 schaltet, die Kanalfilter der Teilnehmerendeinrichtungen V2T1, V2T6, V2T9 des Versorgungsbereiches V2 auf den Empfangskanal fe3, die Kanalfilter der Teilnehmerendeinrichtungen V3T2, V3T3, V3T8, V3T10 des Versorgungsbereiches V3 auf den Empfangskanal fe6 und die Kanalfilter der Teilnehmerendeinrichtungen V7T1, V7T4, V7T6 des Versorgungsbereiches V7 auf den Empfangskanal fe7.

Im dargestellten Beispiel wird dabei zwischen der Einrichtung BSK2 und der Vermittlungsstelle SC1 für die Sendeeinrichtung SB das Kanalpaar s4 und für die Teilnehmer V2T1, V2T6, V2T9 das Kanalpaar s3 belegt. In entsprechender Weise wird für die Gruppe V1 das Kanalpaar s5 und für die Gruppe V3 das Kanalpaar s6 und für die Gruppe V7 das Kanalpaar s7 belegt.

Bei dem zuvor an Hand von Figur 7 beschriebenen Ausführungsbeispiel stammt die erste Sendeprogrammanforderungsinformation von einem Teilnehmerendgerät V2T1 derjenigen Gruppe bzw. desjenigen Versorgungsbereichs V2, dem auch die Sendeeinrichtung V2S1=SB angehört. Hierauf ist das erfindungsgemäße Verfahren nicht eingeschränkt; vielmehr können generell die Sendeeinrichtung und die die erste Sendeprogrammanforderungsinformation übermittelnde Teilnehmerendeinrichtung verschiedenen Versorgungsbereichen, auch in unterschiedlichen Regionen angehören.

Die Registrierung der Gebührendaten erfolgt wie bei dem vorher beschriebenen Ausführungsbeispiel.

In einem Versorgungsbereich können mehrere 10.000 Fernsehteilnehmer bedient werden. Da an eine Vermittlungsstelle SC mehrere Breitbandkabel K (Versorgungsbereiche V) angeschlossen werden können, kann eine regionale Übertragung der beschriebenen Art mehreren 100.000 Fernsehteilnehmern zugänglich sein.

Die regionale Übertragung über den Koppelfeld-Ansgang, z.B. sb des Koppelfeldes KF der Vermittlungsstelle SC1 ist auch für eine überregionale Verteilung verfügbar.

In dem nun an Hand der Figur 8 beschriebenen Ausführungsbeispiel wird davon ausgegangen, daß eine Sendung von einer Sendeeinrichtung V7S1 (Studio Sc), die am Breitbandkabel K7 der Vermittlungsstelle SC1 angeschlossen ist, ausgestrahlt wird. Wenn nun ein erster Teihnehmer, z.B. VzT1 des Versorgungsbereiches Vz der Region Rn (Vermittlungsstelle SCn) an seiner Endeinrichtung z.B. mit einer Fernbedienungseinrichtung IRCU (Figur 4) eine Sendeprogrammanforderungsinformation IV7S1 für des Studio Sc bildet und ihre Übermittlung an die Vermittlungsstelle SCn auslöst, empfängt die Vermittlungsstelle SCn über einen der gemeinsamen Signalisierungskanäle s diese Sende-Programmanforderungsinformation IV7S1. Die Vermittlungsstelle SCn stellt durch eine Abfrage bei ihrer Einrichtung für Verteil-Verbindungen SCnEVV (Figur 3) fest, daß die entsprechende Sendung in der Vermittlungsstelle SCn noch nicht verfügbar ist. Die Vermittlungsstelle SCn überträgt daraufhin über das gemeinsame Signalisierungsnetz und zwar über eine Tandem-Vermittlungsstelle z.B. TE1, die Programmanforderungsinformation bis zur Ursprungs-Vermittlungsstelle SC1, der die Sendeeinrichtung V7S1 (Studio Sc) zugeordnet ist.

Im Zusammenwirken der Steuerungen der Vermittlungsstellen SCn, TE1 und SC1 werden nun Netzteilabschnitte über freie Verbindungswege vom Studio Sc bis zum Teilnehmerendgerät VzT1 des Versorgungsbereiches Vz durchgeschaltet. Dies geschieht z.B. über einen freien Sendekanal fs8 des Breitbandkabels K7 und die Koppelfeldzeile z3 der Vermittlungsstelle SC1 und den Verbindungsweg sa zur Tandem-Vermittlungsstelle TE1 und von dort über eine Verbindung in der Koppelfeldzeile z3 und einen freien Verbindungsweg sg zur Vermittlungsstelle SCn und die Koppelfeldzeile z4 im Koppelfeld KF der Vermittlungsstelle SCn auf einen freien Empfangskanal fe9 des Breitband-Kabels Kz.

Nach Aufbau der Verbindung über die genannten Netzteilabschnitte ist die Sendung des Studios Sc an folgenden Stellen des Netzes zugänglich:
- im Versorgungsbereich Vz auf dem Empfangskanal fe9
- in der Region Rn auf der Koppelfeldzeile z4 der Vermittlungsstelle SCn
- in der Tandemvermittlungsstelle TE1 auf der Koppelfeldzeile z3
- in der Region R1 auf der Koppelfeldzeile z3 der Vermittlungsstelle SC1.

Die weitere Verteilung der Sendeprogramminformationen des Studios Sc auf alle Regionen R1, R2-Rn des Netzes geschieht durch eine Multipunkt-Verbindung in der Koppelfeldzeile z3 der Tandem-Vermittlungsstelle TE1 bei einer jeweils ersten Anforderung eines Teilnehmers aus den Regionen R2, R3-R(n-1).

In entsprechender Weise erfolgt die Verteilung der Sendeprogramminformationen des Studios Sc in die einzellen Versorgungsbereiche V1, V2-V7 der Region R1 über eine Multipunkt-Verbindung in der Koppelfeldzeile z3 des Koppelfeldes KF der Vermittlungsstelle SC1, in die Versorgungsbereiche Va-Vn der Region R2 über eine Multipunkt-Verbindung z.B. in der Koppelfeldzeile z1 des Koppelfeldes KF der Vermittlungsstelle SC1 und in die Versorgungsbereiche Vt-Vz der Region Rn über eine Multipunkt-Verbindung in der Koppelfeldzeile z4 des Koppelfeldes KF der Vermittlungsstelle SCn.

Wie in Figur 8 auch an Hand der fettgedruckten Symbole gezeigt, wird die überregionale Verteil-Verbindung z.B. im Versorgungsbereich V1 durch die Teilnehmerendeinrichtungen V1T2, V1T4, V1T5 und V1T7 repräsentiert, deren Kanalfilter auf den Empfangskanal fe10 von der Vermittlungsstelle SC1 geschaltet wurden, im Versorgungsbereich V2 durch die Teilnehmerendeinrichtungen V2T3, V2T4, V2T7 und V2T10, deren Kanalfilter von der Vermittlungsstelle SC1 auf den Empfangskanal fe11 geschaltet wurde, im Versorgungsbereich V3 durch die Teilnehmer endeinrichtungen V3T1, V3T4-V3T7, deren Kanalfilter durch die Vermittlungsstelle SC1 auf den Empfangskanal fe12 geschaltet wurden, im Versorgungsbereich V7 durch die Teilnehmerendeinrichtungen V7T2, V7T3, V7T7-V7T9, deren Kanalfilter von der Vermittlungsstelle SC1 auf den Empfangskanal fe13 geschaltet wurden, im Versorgungsbereich Va durch die Teilnehmerendeinrichtungen VaT1 , VaT7 -VaT10, deren Kanalfilter von der Vermittlungsstelle SC2 auf den Empfangskanal fe14 geschaltet wurden, im Versorgungsbereich Vn durch die Teilnehmerendeinrichtungen VnT1, VnT2, VnT9, deren Kanalfilter von der Vermittlungsstelle SC2 auf den Empfangskanal fe15 geschaltet wurden, im Versorgungsbereich Vt durch die Teilnehmer VtT1, VtT3, VtT6, VtT7, VtT9, deren Kanalfilter von der Vermittlungsstelle SCn auf den Empfangskanal fe16 geschaltet wurde und im Versorgungsbereich Vz durch die Teilnehmer VzT1, VzT2-VzT10, deren Kanalfilter von der Vermittlungsstelle SCn auf den Empfangskanal fe9 geschaltet wurde.

Bei dem erfindungsgemäßen Verfahren wird eine bereichsweise Lastverteilung im Fernmeldewählnetz erzielt, weil jede Vermittlungsstelle SC1, SC2-SCn, TE1, TE2 nur die Verteil-Verbindungen bzw. Verteil-Verbindungsanteile in ihren Einrichtungen für Verteil-Verbindungen (SC1, SC2-SCn, TE1, TE2-)EVV verwalten und mit ihrer jeweiligen gemeinsamen Steuerung (SC1, SC2-SCn, TE1, TE2-)GST schalten müssen, die ihre Regionen betreffen.

Außerdem wird für jede Verbindungsstrecke im Netz jeweils nur ein einziger Kanal bzw. ein einziges Kanalpaar s10, s11, s12, s8/s13, s8 für das Studio Sc=V7S1 und S13 für die Teilnehmer V7T2, V7T3, V7T7, V7T8, V7T9), sd, s14, s15, sa, s16, s9, sg für eine jeweilige Verteil-Verbindung belegt, was eine effiziente Nutzung der Übertragungskapazität des Netzes zur Folge hat, da bereichsweise begrenzte Verteilerkreise das übrige Netz wie aus den Figuren 6 bis 8 zu ersehen ist, nicht belasten.

Für Anwendungen im kommerziellen Bereich, z.B. "Business Television" können durch "Closed user group"-Funktionen auch geschlossene Verteilerkreise gebildet werden. Unter Ausnutzung des erfindungsgemäßen Verfahrens lassen sich darüberhinaus auch "aktive" Verteil-Verbindungen 0schalten, bei denen ein Studio (Programmanbieter) durch sequentielle Wahl und/oder durch eine Gruppen-Adressierung die Teilnehmerendeinrichtungen an einer Sendung festlegt.

Die Herstellung netzexterner bzw. internationaler Verteil-Verbindungen über die Leitungen IL unterscheidet sich praktisch nicht von den in Figur 6 dargestellten überregionalen Verteil-Verbindungen, da wie Figur 8 zeigt, die Leitungen IL in den Tandem-Vermittlungsstellen TE1, TE2 in die Multipunkt-Verbindungen miteinbezogen werden können.

Der Erfindung liegt, wie auch an Hand der Figuren 6 bis 8 dargestellt, das folgende Prinzip zu Grunde:
Eine Teilnehmerendeinrichtung übermittelt Sendeprogrammanforderungsinformationen an die ihr zugeordnete Vermittlungsstelle. Eine Sendeprogrammanforderungsinformation bezeichnet mindestens eine Sendeeinrichtung, gegebenenfalls zusätzlich auch eine bestimmte Sendung.

Die Vermittlungsstelle schaltet, sofern die Teilnehmerendeinrichtung und die Sendeeinrichtung nicht derselben Gruppe (Versorgungsbereich) angehören, im Zusammenwirken mit der Vermittlungsstelle, der die Sendeeinrichtung angehört, diese an Netz.

Die der Teilnehmerendeinrichtung zugeordnete Vermittlungsstelle ordnet allen Teilnehmerendeinrichtungen der Gruppe, der die erstgenannte Endeinrichtung angehört, denselben Empfangskanal zu. Diese Vermittlungsstelle ordnet den Teilnehmerendeinrichtungen anderer Gruppen, sofern eine dieser Teilnehmerendeinrichtung der Vermittlungsstelle dieselbe Sendeprogramminformation übermittelt, jeweils einen gruppenindividuellen Empfangskanal zu.

Bei dem erfindungsgemäßen Verfahren können also Teilnehmer netzweit die Programminformationen (Sendung) beispielsweise derselben Sendeeinrichtung anfordern. Die Programminformation wird dann in jeder Gruppe auf nur einen, denselben Empfangskanal allen Teilnehmern dieser Gruppe (z.B. 100.000 Gruppenteilnehmern) zugänglich gemacht. Innerhalb einer Region wird die Programminformation über dieselbe Koppelfeldzeile der einen Vermittlungsstelle mehreren Gruppen zugänglich gemacht, so daß auf diese Weise Verteilerkreise bis zu mehreren Millionen Teilnehmern gebildet werden.

Die Durchführung des erfindungsgemäßen Verfahrens ist nicht an ein bestimmtes Übertragungsmedium gebunden. In der erfindungsgemäßen Schaltungsanordnung kann als Medium für die Übertragung der Sendeprogramminformationen, der Sendeprogrammanforderungsinformationen und/oder von Signalisierungsinformationen anstelle der in einem Kabel K1, K2 bereitgestellten Übertragungskanäle/Kanalpaare fe1/fs1-fe192/fs192 Satelliten- und/oder terrestrische Funkkanäle-/Kanalpaare bereitgestellt werden. So kann also vorgesehen sein, daß beispielsweise die Teilnehmerendeinrichtungen in einem Versorgungsbereich über ein gemeinsames Breitbandkabel verbunden sind, während Verbindungen zwischen der zugehörigen Vermittlungsstelle und der Einrichtung BSK über terrestrische Funkkanäle erfolgt. Die Verbindungen zwischen einzelnen Vermittlungsstellen SC und Transitvermittlungsstellen TE können über Satelliten realisiert werden.

Es kann auch vorgesehen sein, daß Sendeprogramminformationen direkt in eine Vermittlungsstelle eingespeist werden.

## Patentansprüche

1. Verfahren zur Verteilung von Sendeprogramminformationen, vorzugsweise in Breitband-Fernmeldewählnetzen, mit einer ersten Vermittlungsstelle (SC1), der eine erste Gruppe (V1) mit Teilnehmerendeinrichtungen (V1T1-V1Ti) und/oder mit Sendeprogramminformationen, vorzugsweise Bild- und Tonprogramme anbietenden Sendeeinrichtungen (V1S1) zugeordnet ist, und der gegebenenfalls weitere Gruppen (V2-V7) zugeordnet sind, denen jeweils Teilnehmerendeinrichungen (V2T1, ..., V2Tj; ...; V7T1, ..., V7Tk) und/oder Sendeprogramminformationen, vorzugsweise Bild- und Tonprogramme anbietende Sendeeinrichtungen (V2S1, ..., V2Sm; ..., V7Sn) zugeordnet sind, mit gegebenenfalls weiteren Vermittlungsstellen (SC2, ..., SCn), denen mindestens jeweils eine vermittlungsstellenindividuelle Gruppe (Va) mit Teilnehmerendeinrichtungen (VaT1, ... VaTo) und/oder mit Sendeprogramminformationen, vorzugsweise Bild- und Tonprogramme anbietenden Sendeeinrichtungen (VaS1, ..., VaSp) zugeordnet ist,
**dadurch gekennzeichnet,**
daß eine erste Teilnehmerendeinrichtung (V1T1) eine zeitlich erste Sendeprogrammanforderungsinformation (IVaS1) an die ihr zugeordnete erste Vermittlungsstelle (SC1) übermittelt, daß die erste Vermittlungsstelle (SC1) der ersten Teilnehmerendeinrichtung (V1T1) einen Empfangskanal (fe1) im Bereich ihrer Gruppe (V1) zuordnet und eine Fernmeldeverbindung zwischen der ersten Teilnehmerendeinrichtung (V1T1) und der durch die Sendeprogrammanforderungsinformation (IVaS1) bezeichnete Sendeeinrichtung (VaS1) herstellt and Informationen über belegte Netzabschnitte der hergestellten Fernmeldeverbindung abspeichert,
daß die erste Vermittlungsstelle (SC1), sofern weitere Teilnehmerendeinrichtungen (V1T2, T1T3), die derselben Gruppe (V1) wie die erste Teilnehmerendeinrichtung (V1T1) angehören, dieselbe Sendeprogrammanforderungsinformation (IVaS1) übermitteln, diese weiteren Teilnehmerendeinrichtungen (V1T2, V1T3) auf denselben Empfangskanal (fe1) schaltet,
daß die erste Vermittlungsstelle (SC1), sofern die weiteren Teilnehmerendeinrichtungen (V2T1, V3T1) nicht derselben Gruppe (V1) wie die erste Teilnehmerendeinrichtung (V1T1) angehören, für die Gruppen (V2, V3) dieser Teilnehmerendeinrichtungen gruppen- und sendeeinrichtungsindividuelle Empfangskanäle (fe3, fe6) belegt und die weiteren Teilnehmerendeinrichtungen (V2T1, V3T1) und alle Teilnehmerendeinrichtungen, die später ebenfalls dieselbe Sendeprogrammanforderungsinformation (IVaS1) übermitteln, die Teilnehmerendeinrichtungen jeweils auf einen gruppen- and sendeeinrichtungsindividuellen Empfangskanal schalten, so daß allen Teilnehmerendeinrichtungen einer Gruppe dieselben Sendeprogramminformationen auf demselben Empfangskanal zugänglich sind.

2. Verfahren nach Anspruch 1, dadurch gekennzeichnet, daß die Fernmeldeverbindung, sofern die erste Teilnehmerendeinrichtung (V1T1) und die durch die Sendeprogrammanforderungsinformation (IVaS1) bezeichnete Sendeeinrichtung (VaS1) unterschiedlichen Vermittlungsstellen (SC1, SC2) zugeordnet sind, über eine Transitvermittlungsstelle (TE1) hergestellt wird, über die auch Fernmeldeverbindungen zwischen mindestens einem Teil der weiteren Vermittlungsstellen (SCn) des Fernmeldewählnetzes herstellbar sind,
daß eine weitere Vermittlungsstelle (SCn), sofern weitere Teilnehmerendeinrichtungen (VtT1, VzT1), die jeweils einer der weiteren Vermittlungsstelle (SCn) zugeordneten Gruppe (Vt, Vz) angehören, der weiteren Vermittlungsstelle (SCn) dieselbe Sendeprogrammanforderungsinformation (IVaS1) übermitteln wie die erste Teilnehmerendeinrichtung (V1T1), den zeitlich weiteren Teilnehmerendeinrichtungen (VtT1, VzT1) jeweils einen gruppen- und sendeeinrichtungsindividuellen Empfangskanal (fe16, fe9) im Bereich ihrer jeweiligen Gruppe (Vt, Vz) zuordnet und jeweils eine Fernmeldeverbindung zwischen den zeitlich weiteren Teilnehmerendeinrichtungen (VtT1, VzT1) und der durch die Sendeprogrammanforderungsinformation (IVaS1) bezeichneten Sendeeinrichtung (VaS1) herstellt und Informationen über weitere belegte Netzabschnitte der hergestellten Fernmeldeverbindungen abspeichert und Teilnehmerendeinrichtungen (VtT2, VtT3, ...; VzT2, VzT3, ...), die derselben Gruppe (Vt, Vz) wie die zeitlich weiteren Teilnehmerendeinrichtungen (VtT1, VzT1) angehören und die der weiteren Vermittlungsstelle (SCn) dieselbe Sendeprogrammanforderungsinformation (IVaS1) übermitteln, auf den jeweils selben gruppen- und sendeeinrichtungsindividuellen Empfangskanal (fe16, fe9) schaltet.

3. Verfahren nach einem der vorstehenden Ansprüche, dadurch gekennzeichnet, daß den Vermittlungsstellen (SC1, SC2, ..., SCn) zugeordnete Steuerungen (SC1GST, SC1EVV; SC2GST SC2EVV; ...; SCnGST SCnEVV) die Berechtigung von Teilnehmerendeinrichtungen (V1T1, ..., V1Ti; V2T1, ..., V2TJ; ...; V7T1, ..., V7Tk; VaT1, ...; VtT1, ...) zum Empfang von Sendeprogramminformationen und/oder die Berechtigung von Sendeeinrichtungen (V1S1, ...,; V2S2, ..., V2Sm; ...; V7S1, ..., V7Sn; VaS1; VtS1, ...; VzT1) zur Verteilung von Sendeprogramminformationen überprüfen.

4. Verfahren nach einem der vorstehenden Ansprüche, dadurch gekennzeichnet, daß den Vermittlungsstellen (SC1, SC2; ..., SCn) zugeordnete Steuerungen (SC1GST, SC1EVV; SC2GST, SC2EVV; ..., SCnGST, SCnEVV) die Verteilung von Sendeprogramminformationen betreffende Daten teilnehmerendeinrichtungsindividuell und/oder sendeeinrichtungsindividuell und/oder hinsichtlich benutzter Teile des Fernmeldewählnetzes abspeichern.

5. Verfahren nach Anspruch 4, dadurch gekennzeichnet, daß den Vermittlungsstellen (SC1, SC2, ..., SCn) zugeordnete Steuerungen (SC1GST, SC1EVV SC1GST, SC1GEE; SC2GST, SC2EVV, SC2GEE; SCnGST, SCnEVV) aus den die Verteilung von Sendeprogramminformationen betreffenden Daten teilnehmerendeinrichtungsindividuelle und/oder sendeeinrichtungsindividuell und/oder hinsichtlich benutzter Teile des Fernmeldewählnetzes individuelle Gebührendaten bildet.

6. Schaltungsanordnung zur Verteilung von Sendeprogramminformationen, vorzugsweise in Breitband-Fernmeldewählnetzen, mit einer ersten Vermittlungsstelle (SC1), die mit einzelnen, vermittlungstechnisch zu einer Gruppe (V1) zusammengefaßten Teilnehmerendeinrichtungen (V1T1-V1Ti) und/oder Sendeeinrichtungen (V1S1, ...) verbunden ist, dadurch gekennzeichnet,
daß die Teilnehmerendeinrichtungen (V1T1-V1Ti) und/oder die Sendeeinrichtungen (V1S1, ...) an ein erstes gemeinsames Kabel (K1) angekoppelt sind,
daß eine der Vermittlungsstelle (SC1) zugeordnete Steuerung (SC1GST, SC1EVV) den Teilnehmerendeinrichtungen (V1T1-V1Ti) zum Empfang von Sendeprogramminformationen einer Sendeeinrichtung (V1S1) einen gruppen- und sendeeinrichtungsundividuellen Empfangskanal (fev1) zuordnet.

7. Schaltungsanordnung nach Anspruch 6, dadurch gekennzeichnet, daß die erste Vermittlungsstelle (SC1), mit zweiten einzelnen, vermittlungstechnisch zu einer zweiten Gruppe (V2) zusammengefaßten Teilnehmerendeinrichtungen (V2T1-V2Tj) und/oder Sendeeinrichtungen (V2S2, ...) verbindbar sind,
wobei die weiteren Teilnehmerendeinrichtungen (V2T1-V2Tj) und/oder die Sendeeinrichtungen (V2S2) an ein zweites gemeinsames Kabel (K2) ankoppelbar sind, wobei die der Vermittlungsstelle (SC1) zugeordnete Steuerung (SC1GST, SC1EVV) den Teilnehmerendeinrichtungen (V2T1-V2Tj) zum Empfang von Sendeprogramminformationen einer Sendeeinrichtung (V1S1, V2S2) einen gruppen- und sendeeinrichtungsindividuellen Empfangskanal (veV2) zuordnet.

8. Schaltungsanordnung nach einem der Ansprüche 6 oder 7, dadurch gekennzeichnet, daß das Fernmeldewählnetz mindestens eine erste Transitvermittlungsstelle (TE1) aufweist, über die Verbundungen zwischen zwei Vermittlungsstellen, denen Teilnehmerendeinrichtungen und/oder Sendeeinrichtungen zugeordnet sind, geführt werden.

9. Schaltungsanordnung nach Anspruch 8, dadurch gekennzeichnet, daß die erste Transitvermittlungsstelle (TE1) mit Übertragungsleitungen (IL) zu netzexternen Sende- und/oder Empfangseinrichtungen verbindbar ist.

10. Schaltungsanordnung nach einem der Ansprüche 6 bis 9, dadurch gekennzeichnet, daß zwischen einer Vermittlungsstelle (SC1) und zugehörigem Kabel (K1 eine Einrichtung (BSK1) geschaltet ist, die von Sendeeinrichtungen (V1S1, V2S1) in digitaler Darstellung gebildete Sendeprogramminformationen in eine teilnehmerendeinrichtungskompatible Darstellung umwandelt.

11. Schaltungsanordnung nach einem der Ansprüche 6 bis 10, dadurch gekennzeichnet, daß die der Vermittlungsstelle (SC1) zugeordnete Steuerung (SC1GST, SC1EVV) Dialogverbindungen zwischen einzelnen ihr zugeordneten Teilnehmerendeinrichtungen (V1T1, ..., V1Ti; V2T1, ..., V2Tj; ..., V7T1, ..., V7Tk) untereinander und/oder zwischen diesen Teilnehmerendeinrichtungen (V1T1, ..., V1Ti; V2T1, ..., V2Tj; ..., V7T1 ..., V7Tk) und sonstigen Teilnehmerendeinrichtungen (VaT1, ...; VnT1, ...; VtT1, ..., VzT1, ...) herstellt.

12. Verwendung einer Teilnehmerendeinrichtung in einer Schaltungsanordnung nach einem der Ansprüche 6 bis 11, dadurch gekennzeichnet, daß die Teilnehmerendeinrichtung ein Teilnehmerendgerät (TV, HDTV) und eine Steuerung (V1T1RCI) aufweist, die in Abhängigkeit von Steuerinformation, die die zugehörige Vermittlungsstelle übermittelt und die einen gruppen- und sendeeinrichtungsindividuellen Empfangskanal (feV1) bezeichnen, ein Kanalfilter (V1T1RCST1) auf den jeweiligen Empfangskanal (feV1) schaltet.

13. Verwendung einer Sendeeinrichtung in einer Schaltungsanordnung nach einem der Ansprüche 6 bis 11, dadurch gekennzeichnet, daß der Sendeeinrichtung (V1S1) eine Steuerung (V1S1ST) zugeordnet ist, die in Abhängigkeit von Steuerinformationen, die die zugehörige Vermittlungsstelle (SC1) übermittelt und die einen gruppenindividuellen Sendekanal (fsV1) bezeichnen, ein Kanalfilter (V1S1TCS1) auf den jeweiligen Sendekanal (fsV1) schaltet.

14. Verwendung eines Fernbedienungsgebers zur Bedienung einer Teilnehmerendeinrichtung in einer Schaltungsanordnung nach einem der Ansprüche 6 bis 11, dadurch gekennzeichnet, daß dem Fernbedienungsgeber (IRC) ein in der Weise ausgestaltetes Programm zugeordnet ist, daß ausgelöst durch Betätigung einer Tastatur (KB) Sendeprogrammanforderungsinformationen (IVaS1) generierbar sind, die drahtlos oder drahtgebunden einer Empfangseinrichtung (V1T1T/S) der Teilnehmerendeinrichtung (V1T1 zugeführt werden.

15. Schaltungsanordnung nach einem der Ansprüche 6 bis 11, dadurch gekennzeichnet, daß als Medium für die Übertragung der Sendeprogramminformationen und/oder der Sendeprogrammanforderungsinformationen anstelle der in einem Kabel (K1, K2,...) bereitgestellten Übertragungskanäle-/Kanalpaare (fe1/fs1-fe192/fs192) Satelliten- und/oder terristrische Funkkanäle-Kanalpaare bereitgestellt werden.

## Claims

1. A method for distributing broadcast program information, preferably in switched broadband networks, comprising a first switching center (SC1) which is associated with a first group (V1) comprising subscriber terminals (V1T1-V1Ti) and/or comprising transmitting facilities (V1S1) offering broadcast program information, preferably video and audio programs, and which is possibly associated with other groups (V2-V7) which are in each case associated with subscriber terminals (V2T1, ..., V2Tj; ..; V7T1, ..., V7Tk) and/or transmitting facilities (V2S1, . . .., V2Sm; ., V7Sn) offering broadcast program information, preferably video and audio programs, optionally comprising other switching centers (SC2, ..., SCn) which are associated with at least in each case one switching-center-individual group (Va) comprising subscriber terminals (VaT1, ... VaTo) and/or comprising transmitting facilities (VaS1, ..., VaSp) offering broadcast program information, preferably video and audio programs, wherein a first subscriber terminal (V1T1) transmits a first broadcast program request information item (IVaS1) in tine to its associated first switching center (SC1), the first switching center (SC1) of the first subscriber terminal (V1T1) allocates a receiving channel (fe1) in the area of its group (V1) and establishes a telecommunication connection between the first subscriber terminal (V1T1) and the transmitting facility (VaS1) designated by the broadcast program request information (IVaS1) and stores information on occupied network sections of the established telecommunication connection, the first switching center (SC1), if other subscriber terminals (V1T2, T1T3) which belong to the same group (V1) as the first subscriber terminal (V1T1) transmit the same broadcast program request information (IVaS1), connects these other subscriber terminals (V1T2, V1T3) to the same receiving channel (fe1), the first switching center (SC1), if the other subscriber terminals (V2T1, V3T1) do not belong to the same group (V1) as the first subscriber terminal (V1T1), seizes group- and transmitting-facility-individual receiving channels (fe3, fe6) for the groups (V2, V3) of these subscriber terminals and the other subscriber terminals (V2T1, V3T1) and all subscriber terminals which later also transmit the same broadcast program request information (IVaS1) in each case connect the subscriber terminals to a group- and transmitting-facility-individual receiving channel so that the same broadcast program information is accessible en the same receiving channel to all subscriber terminals of one group.

2. Method as claimed in claim 1, wherein the telecommunication connection, is the first subscriber terminal (V1T1) and the transmitting facility (VaS1) designated by the broadcast program request information (IVaS1) are associated with different switching centers (SC1, SC2), is established via a transit switching center (TE1) via which telecommunication connections can also be established between at least some of the other switching centers (SCn) of the switched telecommunications network, another switching center (SCn), if other subscriber terminals (VtT1, VzT1) which in each case belong to a group (Vt, Vz) associated with the other switching center (SCn) transmit to the other switching center (SCn) the same broadcast program request information (IVaS1) as the first subscriber terminal (V1T1), in each case allocates to the other subscriber terminals (VtT1, VzT1) in time a group- and transmitting-facility-individual receiving channel (fe16, fe9) in the area of their respective group (Vt, Vz) and in each case establishes a telecommunication connection between the other subscriber terminals (VtT1, VzT1) in time and the transmitting facility (VaS1) designated by the broadcast program request information (IVaS1) and stores information on other seized network sections of the established telecommunication connections and connects subscriber terminals (VtT2, VtT3, ...; VzT2, VzT3, ...), which belong to the same group (Vt, Vz) as the other subscriber terminals (VtT1, VzT1) in time and which transmit the same broadcast program request information (IVaS1) to the other switching center (SCn), to the in each case same group- and transmitting-facility-individual receiving channel (fe16, fe9).

3. Method as claimed in one of the preceding claims, where in controllers (SC1GST, SC1EVV; SC2GST, SC2EVV; ..; SCGST, SCEVV) associated with the switching centers (SC1, SC2, ..., SCn) check the authorization of subscriber terminals (V1T1, ..., V1Ti; V2T1, ..., V2TJ; ..; V7T1, ..., V7Tk; VaT1, ...; . VtT1, ...) for receiving broadcast program information and/or the authorization of transmitting facilities (V1S1, ...,; V2S2, ..., V2Sm; ...; V7S1, ..., V7Sn; VaS1; VtS1; ...; VzT1) for distributing broadcast program information.

4. Method as claimed in one of the preceding claims, wherein controllers (SC1GST, SC1EVV; SC2GST, SC2EVV; . .., SCGST, SCEVV) associated with the switching centers (SC1, SC2; ..., SCn) store data relating to the distribution of broadcast program information subscriber-terminal-individualty and/or transmitting-facility-individually and/or with regard to used sections of the switched telecommunication network.

5. Method as claimed in claim 4, wherein controllers (SC1GST, SC1EVV, SC1GST, SC1GEE; SC2GST, SC2EVV, SC2GEE; SCGST, SCEVV) associated with the switching centers (SC1, 5C2, ..., SCn) form subscriber-terminal-individual and/or transmitting-facility-individual call charging data and/or call-charging data individual with regard to used parts of the switched telecommunication network from the data relating to the distribution of broadcast program information.

6. Circuit arrangement for distributing broadcast program information, preferably in switched broadband telecommunication networks, comprising a first switching center (SC1) which is connected to individual subscriber terminals (V1T1-V1Ti), which are combined by switching means to form a group (V1), and/or transmitting facilities (V1S1, ...,), characterized in that
the subscriber terminals (V1T1-V1Ti) and/or the transmitting facilities (V1S1, ...) are connected to a first common cable (K1),
a controller (SC1GST, SC1EVV) associated with the switching center (SC1) allocates a group- and transmitting-facility-individual receiving channel (fev1) to the subscriber terminals (V1T1-V1Ti) for receiving broadcast program information of a transmitting facility (V1S1).

7. Circuit arrangement as claimed in claim 6, wherein the first switching center (SC1) can be connected to second individual subscriber terminals (V2T1-V2Tj), which are combined by switching means to form a second group (V2), and/or transmitting facilities (V2S2, ...), the other subscriber terminals (V2T1-V2Tj) and/or the transmitting facilities (V2S2) being connectable to a second common cable (L2), the controller (SC1GST,SC1EVV) associated with the switching center (SC1) allocating a group- and transmitting-facility-individual receiving channel (veV2) to the subscriber terminals (V2T1-V2Tj) for receiving broadcast information of a transmitting facility (V1S1, V2S2).

8. Circuit arrangement as claimed in one of claims 6 or 7, wherein the switched telecommunication network exhibits at least one first transit switching center (TE1) via which connections between two switching centers, to which subscriber terminals and/or transmitting facilities are allocated, are conducted.

9. Circuit arrangement as claimed in claim 8, wherein the first transit switching center (TE1) can be connected to transmission lines (IL) to network-external transmitting and/or receiving facilities.

10. Circuit arrangement as claimed in one of claims 6 to 9, wherein a facility (BSK1) which converts broadcast program information formed in digital representation by transmitting facilities (V1S1, V2S1) into a subscriber-terminal-compatible representation, is connected between a switching center (SC1) and the associated cable (K1).

11. Circuit arrangement as claimed in one of claims 6 to 10, wherein the controller (SC1GST, SC1EVV) associated with the switching center (SC1) establishes interactive connections mutually between individual subscriber terminals (V1T1, . .., V1T1; V2T1 , . .., V2Tj;..., V7T1, ..., V7TTk) associated with it and/or between these subscriber terminals (V1T1, ..., V1Ti; V2T1, ..., V2Tj; ..., V7T1, ..., V7Tk) and other subscriber terminals (VaT1, ...; VnT1,.. . ..; VtT1, .., VzT1, .).

12. Use of a subscriber terminal as claimed in one of claims 6 to 11, wherein the subscriber terminal exhibits a subscriber terminal unit (TV, HDTV) and a controller (V1T1RCI) which, in dependence an control information which is transmitted by the associated switching canter (SC1) and which designates a group- and transmitting-facility-individual receiving channel (feV1), connects a channel filter (V1T1RCST1) to the respective receiving channel (feV1).

13. Use of a transmitting facility as claimed in one of claims 6 to 11, wherein the transmitting facility (V1.S1) is associated with a controller (V1S1ST) which, in dependence on control information which is transmitted by the associated switching center (SC1) and which designates a group-individual transmitting channel (fsV1), connects a channel filter (V1S1TCS1) to the respective transmitting channel (fsV1).

14. Use of a remote control transmitter for operating a subscriber terminal in a circuit arrangement as claimed in one of claims 6 to 11, wherein the remote control transmitter (IRC) is associated with a program designed in such a manner that, triggered by the operation of a keyboard (KB), broadcast program request information (IVaS1) can be generated which is supplied wirelessly or wire-conducted to a receiving facility (V1T1T/S) of the subscriber terminal (V1T1).

15. Circuit arrangement as claimed in one of claims 6 to 11, wherein satellite and/or terrestrial radio channels/channel pairs are provided instead of the transmission channels/channel pairs (fe1/fs1-fe192/fs192) provided in a cable (K1, K2, ...) as medium for the transmission of the broadcast program information and/or of the broadcast program request information.

## Revendications

1. Procédé pour la diffusion d'informations sur des programmes émis, de préférence dans des réseaux automatiques de télécommunication à large bande, avec un premier centre de commutation (SC1) auquel est associé un premier groupe (V1) contenant des équipements terminaux d'abonné (V1T1-V1Ti) et/ou des émetteurs (V1S1) offrant des informations sur des programmes émis, de préférence des programmes vidéo et audio, et auquel sont associés, le cas échéant, d'autres groupes (V2-V7) auxquels sont associés, à chaque fois, des équipements terminaux d'abonné (V2T1, ..., V2Tj; ...; V7T1, ..., V7Tk) et/ou des émetteurs (V2S1, ..., V2Sm; ..., V7Sn) offrant des informations sur des programmes émis, de préférence des programmes vidéo et audio, et avec, le cas échéant, d'autres centres de commutation (SC2, ..., SCn) auxquels est associé à chaque fois au moins un groupe (Va), sur une base individuelle pour chaque centre de commutation, contenant des équipements terminaux d'abonné (VaT1, ..., VaTo) et/ou des émetteurs (VaS1, ..., VaSp) offrant des informations sur des programmes émis, de préférence des programmes vidéo et audio,
caractérisé en ce qu'un premier équipement terminal d'abonné (V1T1) transmet au premier centre de commutation (SC1) qui lui est associé une information de demande sur des programmes émis (IVaS1) qui est chronologiquement la première, en ce que le premier centre de commutation (SC1) affecte au premier équipement terminal d'abonné (V1T1) un canal de réception (fe1) dans la zone de son groupe (V1), et établit une télécommunication entre le premier équipement terminal d'abonné (V1T1) et l'émetteur (VaS1) spécifié par l'information de demande sur des programmes émis (IVaS1), et mémorise des informations sur les segments de réseau occupés par la télécommunication établie,
en ce que, dans la mesure où d'autres équipements terminaux d'abonné (V1T2, T1T3) appartenant au même groupe (V1) que le premier équipement terminal d'abonné (V1T1) transmettent la même information de demande sur des programmes émis (IVaS1), le premier centre de commutation (SC1) branche ces autres équipements terminaux d'abonné (V1T2, V1T3) sur le même canal de réception (fe1),
en ce que, dans la mesure où les autres équipements terminaux d'abonné (V2T1, V3T1) n'appartiennent pas au même groupe (V1) que le premier équipement terminal d'abonné (V1T1), le premier centre de commutation (SC1) occupe, pour les groupes (V2, V3) de ces équipements terminaux d'abonné, des canaux de réception (fe3, fe6) sur une base individuelle pour chaque groupe et chaque émetteur, et branche à chaque fois les autres équipements terminaux d'abonné (V2T1, V3T1) et tous les équipements terminaux d'abonné qui, ultérieurement, transmettent également la même information de demande sur des programmes émis (IVaS1), sur un canal de réception sur une base individuelle pour chaque groupe et chaque émetteur, de manière à ce que les mêmes informations sur des programmes émis soient accessibles à tous les équipements terminaux d'abonné d'un groupe sur le même canal de réception.

2. Procédé selon la revendication 1, caractérisé en ce que, dans la mesure où le premier équipement terminal d'abonné (V1T1) et l'émetteur (VaS1) spécifié par l'information de demande sur des programmes émis (IVaS1) sont associés à des centres de commutation différents (SC1, SC2), la télécommunication est établie par le biais d'un centre de commutation de transit (TE1) par l'intermédiaire duquel des télécommunications peuvent être établies également entre au moins une partie des autres centres de commutation (SCn) du réseau automatique de télécommunication,
en ce que, dans la mesure où d'autres équipements terminaux d'abonné (VtT1, VzT1) appartenant à chaque fois à un groupe (Vt, Vz) associé à un autre centre de commutation (SCn) transmettent à l'autre centre de commutation (SCn) la même information de demande sur des programmes émis (IVaS1) que le premier équipement terminal d'abonné (V1T1), cet autre centre de commutation (SCn) affecte à chaque fois aux équipements terminaux d'abonné (VtT1, VzT1), qui sont seconds chronologiquement, un canal de réception (fe16, fe9) dans la zone de leur groupe respectif (Vt, Vz) sur une base individuelle pour chaque groupe et chaque émetteur, et établit à chaque fois une télécommunication entre les équipements terminaux d'abonné seconds chronologiquement (VtT1, VzT1) et l'émetteur (VaS1) spécifié par l'information de demande sur des programmes émis (IvaS1), et mémorise des informations sur d'autres segments de réseaux occupés par les télécommunications établies, et branche les équipements terminaux d'abonné (VtT2, VtT3, ..., VzT2, VzT3, ...) appartenant au même groupe (Vt, Vz) que les équipements terminaux seconds chronologiquement (VtT1, VzT1) et transmettant à l'autre centre de commutation (SCn) la même information de demande sur des programmes émis (IVaS1), sur le même canal de réception (fe16, fe9) respectif sur une base individuelle pour chaque groupe et chaque émetteur.

3. Procédé selon l'une quelconque des revendications précédentes, caractérisé en ce que des commandes (SC1GST, SCIEVV; SC2GST, SC2EVV; ...; SCnGST, SCnEVV) associées aux centres de commutation (SC1, SC2, ..., SCn) vérifient le droit des équipements terminaux d'abonné (V1T1, ..., V1Ti; V2T1, ..., V2Tj; ...; V7T1, ..., V7Tk; VaT1, ...; VtT1, ...) à la réception d'informations sur des programmes émis et/ou le droit des émetteurs (V1S1, ...; V2S2, ..., V2Sm; ...; V7S1, ..., V7Sn; VaS1; VtS1, ...; VzT1) à la diffusion d'informations sur des programmes émis.

4. Procédé selon l'une quelconque des revendications précédentes, caractérisé en ce que des commandes (SC1GST, SC1EVV; SC2GST, SC2EVV; ...; SCnGST, SCnEVV) associées aux centres de commutation (SC1, SC2; ..., SCn) mémorisent des données concernant la diffusion d'informations sur des programmes émis, sur une base individuelle pour chaque équipement terminal d'abonné et/ou sur une base individuelle pour chaque émetteur et/ou relatives aux parties utilisées du réseau automatique de télécommunication.

5. Procédé selon la revendication 4, caractérisé en ce que des commandes (SC1GST, SC1EVV, SC1GST, SC1GEE; SC2GST, SC2EVV, SC2GEE; SCnGST, SCnEVV) associées aux centres de commutation (SC1, SC2, ..., SCn) génèrent des données individuelles de taxation à partir des données concernant la diffusion d'informations sur des programmes émis, sur une base individuelle pour chaque équipement terminal d'abonné et/ou sur une base individuelle pour chaque émetteur et/ou relatives aux parties utilisées du réseau automatique de télécommunication.

6. Circuit pour la diffusion d'informations sur des programmes émis, de préférence dans des réseaux automatiques de télécommunication à large bande, comprenant un premier centre de commutation (SC1) qui est relié à des équipements terminaux d'abonné (V1T1-V1Ti) individuels réunis en un groupe (V1) par une technique de commutation et/ou à des émetteurs (V1S1, ...), caractérisé
en ce que les équipements terminaux d'abonné (V1T1-V1Ti) et/ou les émetteurs (V1S1, ...) sont raccordés à un premier câble commun (K1),
en ce qu'une commande (SC1GST, SC1EVV) associée au centre de commutation (SC1) affecte aux équipements terminaux d'abonné (V1T1-V1Ti), pour la réception d'informations sur des programmes émis d'un émetteur (V1S1), un canal de réception (fev1), sur une base individuelle pour chaque groupe et chaque émetteur.

7. Circuit selon la revendication 6, caractérisé en ce que le premier centre de commutation (SC1) peut être relié à des seconds équipements terminaux d'abonné (V2T1-V2Tj) individuels réunis en un second groupe (V2) par une technique de commutation et/ou à des émetteurs (V2S2, ...),
les seconds équipements terminaux d'abonné (V2T1-V2Tj) et/ou les émetteurs (V2S2) pouvant être raccordés à un second câble commun (K2), la commande (SC1GST, SC1EVV) associée au centre de commutation (SC1) affectant aux équipements terminaux d'abonné (V2T1-V2Tj), pour la réception d'informations sur des programmes émis d'un émetteur (V1S1, V2S2), un canal de réception (veV2), sur une base individuelle pour chaque groupe et chaque émetteur.

8. Circuit selon l'une des revendications 6 ou 7, caractérisé en ce que le réseau automatique de télécommunication comprend au moins un premier centre de commutation de transit (TE1) par le biais duquel des liaisons sont réalisées entre deux centres de commutation auxquels sont associés des équipements terminaux d'abonné et/ou des émetteurs.

9. Circuit selon la revendication 8, caractérisé en ce que le premier centre de commutation de transit (TE1) peut être relié à des lignes de transmission (IL) menant à des émetteurs et/ou récepteurs extérieurs au réseau.

10. Circuit selon l'une quelconque des revendications 6 à 9, caractérisé en ce qu'un dispositif (BSK1) est branché entre un centre de commutation (SC1) et le câble associé (K1), lequel dispositif convertit des informations sur des programmes émis générées dans une présentation numérique par des émetteurs (V1S1, V2S1) en une présentation compatible avec les équipements terminaux d'abonné.

11. Circuit selon l'une quelconque des revendications 6 à 10, caractérisé en ce que la commande (SC1GST, SC1EVV) associée au centre de commutation (SC1) établit des liaisons conversationnelles entre les équipements terminaux individuels (V1T1, ..., V1Ti; V2T1, ..., V2Tj; ..., V7T1, ..., V7Tk) qui lui sont associés et/ou entre ces équipements terminaux d'abonné (V1T1, ..., V1Ti; V2T1, ..., V2Tj; ..., V7T1, ..., V7Tk) et d'autres équipements terminaux d'abonné (VaT1, ... ; VnT1, ... ; VtT1, ..., VzT1, ...).

12. Utilisation d'un équipement terminal d'abonné dans un circuit selon l'une quelconque des revendications 6 à 11, caractérisée en ce que l'équipement terminal d'abonné comprend un terminai d'abonné (TV, HDTV) et une commande (V1T1RCI) qui, en fonction des informations de commande transmises par le centre de commutation associé et spécifiant un canal de réception (feV1) sur une base individuelle pour chaque groupe et chaque émetteur, branche un filtre de voie (V1T1RCST1) sur le canal de réception (feV1) respectif.

13. Utilisation d'un émetteur dans un circuit selon l'une quelconque des revendications 6 à 11, caractérisée en ce qu'une commande (V1S1ST) est associée à l'émetteur (V1S1), laquelle commande, en fonction des informations de commande transmises par le centre de commutation (SC1) associé et spécifiant un canal d'émission (fsV1) sur une base individuelle pour chaque groupe, branche un filtre de voie (V1S1TCS1) sur le canal d'émission (fsV1) respectif.

14. Utilisation d'un manipulateur à télécommande pour la commande d'un équipement terminal d'abonné dans un circuit selon l'une quelconque des revendications 6 à 11, caractérisée en ce qu'un programme est associé au manipulateur à télécommande (IRC), lequel programme est conçu de manière à ce qu'il soit possible de générer, en les déclenchant par l'actionnement d'un clavier (KB), des informations de demande sur des programmes émis (IVaS1) pouvant être amenées, par une liaison sans fil ou sur fil, à un récepteur (V1T1T/S) de l'équipement terminal d'abonné (V1T1).

15. Circuit selon l'une des revendications 6 à 11, caractérisé en ce que l'on peut fournir, en tant que moyen pour la transmission des informations sur des programmes émis et/ou des informations de demande sur des programmes émis, au lieu des paires de canaux ou de canal de transmission (fe1/fs1-fe192/fs192) disponibles dans un câble (K1, K2, ...), des paires de canaux ou de canal radio par satellite et/ou terrestres.
